(19) Europäisches Patentamt / European Patent Office / Office européen des brevets

(11) **EP 2 290 002 B1**

(12) **EUROPEAN PATENT SPECIFICATION**

(45) Date of publication and mention of the grant of the patent:
**08.08.2018 Bulletin 2018/32**

(21) Application number: **09766381.9**

(22) Date of filing: **09.06.2009**

(51) Int Cl.:
*C08L 71/02* (2006.01)  *C08F 2/44* (2006.01)
*C08F 283/06* (2006.01)  *C08G 18/63* (2006.01)
*C08G 65/26* (2006.01)  *C08G 18/40* (2006.01)
*C08G 18/16* (2006.01)  *C08G 18/18* (2006.01)
*C08G 18/20* (2006.01)  *C08G 18/24* (2006.01)
*C08L 83/00* (2006.01)  *C08G 18/76* (2006.01)
*C08G 18/48* (2006.01)  *C08G 101/00* (2006.01)

(86) International application number:
**PCT/JP2009/002592**

(87) International publication number:
**WO 2009/153933 (23.12.2009 Gazette 2009/52)**

(54) **POLYMER POLYOL AND METHOD FOR PRODUCING POLYURETHANE**

POLYMERPOLYOL UND VERFAHREN ZUR HERSTELLUNG VON POLYURETHAN

POLYOL POLYMÈRE ET PROCÉDÉ DE FABRICATION DE POLYURÉTHANE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **16.06.2008 JP 2008157063**

(43) Date of publication of application:
**02.03.2011 Bulletin 2011/09**

(73) Proprietor: **Sanyo Chemical Industries, Ltd.**
**Kyoto-shi**
**Kyoto 605-0995 (JP)**

(72) Inventors:
• **NAKADA, Shigekuni**
  **Kyoto-shi**
  **Kyoto 605-0995 (JP)**

• **KAKU, Motonao**
  **Kyoto-shi**
  **Kyoto 605-0995 (JP)**

(74) Representative: **Kotitschke, Ralf Thomas et al**
**Maiwald Patentanwalts- und Rechtsanwaltsgesellschaft mbH**
**Elisenhof**
**Elisenstraße 3**
**80335 München (DE)**

(56) References cited:
WO-A2-02/085964     JP-A- 2 294 319
JP-A- 3 128 914     JP-A- 7 206 961
JP-A- 2003 301 041   JP-A- 2005 162 791
JP-A- 2006 063 344   JP-A- 2007 039 677
JP-A- 2007 191 682   JP-A- 2008 189 903

**Description**

TECHNICAL FIELD

The present invention relates to a polymer polyol and to a method for producing a polyurethane by using this polymer polyol. More specifically, the present invention relates to a polymer polyol which is suitable as a raw material of a polyurethane, such as a polyurethane foam or a polyurethane elastomer and which imparts superior mechanical physical properties to a polyurethane.

BACKGROUND ART

Heretofore, for a polymer polyol produced by polymerizing an ethylenically unsaturated compound containing acrylonitrile in a polyol, it has been required to make the acrylonitrile ratio in the ethylenically unsaturated compound low (67 mol% or less) in order to improve the scorch resistance of a polyurethane foam produced from this polymer polyol. As a polymer polyol in which the styrene ratio has been increased by reducing the acrylonitrile ratio in the polymer, a polymer polyol with a specified particle size distribution (see, for example, Patent Document 1) has been known. Moreover, there has been known a polymer polyol that is produced by a production method of continuous polymerization in which the dissolved oxygen concentration is controlled to 5 to 120 ppm and that has a concentration of coarse particles of 100 $\mu$m or more in diameter of from 5 to 120 ppm (see, for example, Patent Document 2).

On the other hand, it has been known that a soft polyurethane foam with good vibration characteristics can be produced by making a polyol component contain a specific polyol in which the average number of moles of ethylene oxide added per active hydrogen atom and the primary hydroxidation ratio of terminal hydroxyl groups satisfy a specific relationship in producing a urethane foam (Patent Document 3). Patent Document 3 discloses production by polymerizing a vinyl-based monomer in the specific polyol by an ordinary method.

PRIOR ART DOCUMENTS

PATENT DOCUMENTS

> Patent Document 1: Japanese Patent Application Laid-Open (JP-A) No. 11-236499
> Patent Document 2: JP-A No. 2005-162791
> Patent Document 3: JP-A No. 2005-290202

SUMMARY OF THE INVENTION

PROBLEMS TO BE SOLVED BY THE INVENTION

However, a polymer polyol that is produced by polymerizing a vinyl-based monomer in the above-mentioned specific polyol by an ordinary method (e.g., the methods disclosed in Patent Documents 1 and 2) is a polymer polyol having a large volume average particle diameter of polymer fine particles. In producing a polyurethane foam by mechanical foaming using this polymer polyol having a large volume average particle diameter, there is a problem of occurrence of clogging in a discharge head in a foaming machine. In addition, a polyurethane foam produced from the polymer polyol has a problem that the hardness thereof is insufficient.

It is an object of the present invention to provide a polymer polyol that solves these problems.

MEANS FOR SOLVING THE PROBLEMS

That is, a gist of the polymer polyol (A) of the present invention is that it is a polymer polyol in which polymer fine particles (JR) having an ethylenically unsaturated compound (E) as a constituent unit are contained in a polyol (PL), wherein the (PL) comprises the following polyol (a), and the volume average particle diameter [R] of the polymer fine particles (JR) is from 0.1 to 1.5 $\mu$m;

polyol (a): a polyether polyol resulting from random and/or block addition of an alkylene oxide mainly composed of a 1, 2-alkylene oxide to an active hydrogen-containing compound, wherein the average number x of moles of ethylene oxide added per active hydrogen atom is 20 or less, the primary hydroxidation ratio y of terminal hydroxyl groups is 40% or more, and x and y (%) satisfy a relationship of the following formula (1) when x is from 10 to 20 and a relationship of the following formula (2) when x is less than 10;

$$y \geq 0.328x + 90.44 \qquad (1)$$

$$y \geq 42x^{0.47}(1 - x/41) \qquad (2).$$

Moreover, another gist of the method of the present invention for producing a polyurethane is that it is a method for producing a polyurethane by making a polyol component and an isocyanate component react with each other, wherein a polyol component that comprises this polymer polyol (A) in an amount of from 10 to 100% by weight based on the weight of the polyol component is used as a polyol component.

EFFECTS OF THE INVENTION

The polymer polyol (A) of the present invention and a polyurethane obtained by using the (A) exhibit the following effects.

(1) Filterability in the case of producing a polyurethane foam by mechanical foaming using the polymer polyol (A) as a raw material becomes good, and clogging of a polyurethane foam in a discharge head is prevented, resulting in good productivity, which leads to easy maintenance of a polyurethane production apparatus and improvement in productivity.
(2) Mechanical physical properties of a polyurethane are improved, for example, a polyurethane foam produced using the polymer polyol (A) comes to have good hardness.

MODES FOR CARRYING OUT THE INVENTION

The polymer polyol in the present invention is a material in which polymer fine particles (JR) obtained by polymerizing an ethylenically unsaturated compound (E) as a constituent unit are contained in a polyol (PL).
The polyol (PL) contains the above-mentioned polyol (a) as an essential component. Examples of the active hydrogen-containing compound to be used for the (a) include dihydric to octahydric or higher polyhydric alcohols, amines, polyhydric phenols, polycarboxylic acids, and mixtures thereof.
From the viewpoint of the mechanical physical properties of a polyurethane to be obtained, the active hydrogen equivalent of the active hydrogen-containing compound is preferably from 20 to 300.
Examples of the above-mentioned polyhydric alcohols include dihydric alcohols having 2 to 20 carbon atoms (henceforth, abbreviated to C), C3 to 20 trihydric alcohols, C5 to 20 tetrahydric to octahydric alcohols.
Examples of the C2 to 20 dihydric alcohols include aliphatic diols (ethylene glycol, propylene glycol, 1,3- and 1,4-butanediol, 1,6-hexanediol, neopentyl glycol)
and alicyclic diols (cyclohexanediol, cyclohexane dimethanol).
Examples of the C3 to 20 trihydric alcohols include aliphatic triols (glycerol, trimethylolpropane).
Examples of the C5 to 20 tetrahydric to octahydric alcohols include aliphatic polyols (pentaerythritol, sorbitol, mannitol, sorbitan, diglycerol, dipentaerythritol)
and saccharides (sucrose, glucose, mannose, fructose, methyl glucoside and derivatives thereof).
Examples of the amines include monoamines, polyamines, alkanolamines.
Examples of the monoamines include ammonia, C1 to 20 aliphatic amines (n-butylamine, octylamine), C6 to 20 aromatic amines (aniline, toluidine), C4 to 20 alicyclic amines (cyclohexylamine), C4 to 20 heterocyclic amines (piperidine).
Examples of the polyamines include C2 to 6 aliphatic amines (ethylenediamine, propylenediamine, hexamethylenediamine), C4 to 20 polyalkylenepolyamines (C2 to 6 dialkylenetriamine, trialkylenetetramine, tetraalkylenepentamine, pentaalkylenehexamine, and hexaalkyleneheptamine).
Examples of the alkanolamines include monoethanolamine, diethanolamine, triethanolamine, isopropanolamine.
Examples of the polyhydric (dihydric to octahydric or higher hydric) phenols include monocyclic polyhydric phenols (pyrogallol, hydroquinone, phloroglucin), bisphenols (bisphenol A, bisphenol F, bisphenol sulfone), condensates of phenols and formaldehyde (novolaks), polyphenols disclosed in the specification of U. S. Patent No. 3265641.
Examples of the polycarboxylic acids include C4 to 18 aliphatic polycarboxylic acids (succinic acid, adipic acid, sebacic acid, glutaric acid, azelaic acid) and C8 to 18 aromatic polycarboxylic acids (terephthalic acid, isophthalic acid.
Among such active hydrogen-containing compounds, polyhydric alcohols are preferred from the viewpoint of the mechanical physical properties of a polyurethane to be obtained.

In the (a), an alkylene oxide (henceforth, abbreviated to an AO) to be added to an active hydrogen-containing compound comprises a 1,2-AO as the main component, and one that contains ethylene oxide (henceforth, abbreviated to EO) is preferred from the viewpoint of the mechanical physical properties of a polyurethane to be obtained.

As 1,2-AOs of C3 or more, those of C3 to 8 are preferred and examples thereof include 1,2-propylene oxide (henceforth, abbreviated to PO), 1,2-, 2,3-, and 1,3-butylene oxide (henceforth, abbreviated to BO), 1,2-pentene oxide, styrene oxide, α-olefin oxide, and combinations of two or more kinds of these (block and/or random addition). Among these, PO is preferred from the viewpoint of the mechanical physical properties of a polyurethane to be obtained.

Although the AO is preferably one that is composed of only a 1,2-AO of C3 or more and EO, the AO may contain, in addition to these, an AO other than these in a small ratio (for example, 5% by weight or less based on the weight of the whole AO). The content of a 1,2-AO of C3 or more in the AO to be used is preferably 50% by weight or more and more preferably 70% by weight or more based on the weight of the whole AO, from the viewpoint of the moisture resistance of a polyurethane to be obtained.

The mode of the addition of an AO includes one in which an AO has been random- and/or block-added to an active hydrogen-containing compound. From the viewpoint of the mechanical physical properties of a polyurethane to be obtained, the content of the whole EO including terminal EO in the AO is preferably 50% by weight or less, and more preferably 30% by weight or less. Specific examples thereof include those resulting from addition of a 1,2-AO of C3 or more (e.g., a case of PO) and EO to the above-mentioned active hydrogen-containing compound in the following modes.

(1) mode of block addition in an order of PO-EO
(2) mode of block addition in an order of PO-EO-PO-EO
(3) mode of block addition in an order of EO-PO-EO
(4) mode of block addition in an order of PO-EO-PO
(5) mode of random addition of PO and EO
(6) mode of random and block addition in the order disclosed in the specification of U.S. Patent No. 4226756

Among these, terminal EO adducts are preferred, and (1) is more preferred.

Examples of the method for obtaining the polyol (a) include a method in which the AO is added to the above-mentioned active hydrogen-containing compound in the presence of a specific catalyst (α) in the order described in the above-mentioned (1) to (6), (1) is explained below.

Although the (α) is used at the time of the addition of PO (this is an example of 1,2-AOs of C3 or more), it is not necessarily required to be used in all stages of the PO addition, and it is also permissible that part of PO is added in the presence of a different catalyst that is usually used and then the rest of PO is added using the (α) only in the latter stage of the addition reaction.

If a catalyst (α) is used, a product in which the primary hydroxidation ratio of a PO adduct is high will be obtained. Examples of the catalyst (α) include the catalyst disclosed in JP-A No. 2000-344881 (corresponding U.S. Patent No. 6531566) . Specific examples thereof include a boron compound or aluminum compound to which at least one kind selected from the group consisting of a fluorine atom, a (substituted) phenyl group, and a tertiary alkyl group is bonded, e.g., triphenylborane, diphenyl-tert-butylborane, tri(tert-butyl)borane, triphenylaluminum, tris(pentafluorophenyl)borane, tris(pentafluorophenyl)aluminum.

Among these, triphenylborane, triphenylaluminum, tris-(pentafluorophenyl)borane, and tris(pentafluorophenyl)aluminum are preferred from the viewpoint of the physical properties of a polyurethane to be obtained, and tris(pentafluorophenyl)borane and tris(pentafluorophenyl)aluminum are more preferred.

The condition for the addition of PO may be the same as that of the method disclosed in the above-mentioned publication, and a reaction is performed using the above-mentioned catalyst in an amount of preferably from 0.0001 to 10% by weight, more preferably from 0.001 to 1% by weight relative to a ring opening polymer to be formed, at preferably from 0 to 250°C, more preferably from 20 to 180°C.

A polyol with a higher primary hydroxidation ratio can be obtained by further adding EO to the above-mentioned PO adduct. Since the above-mentioned PO adduct has an extremely high primary hydroxidation ratio of the terminal hydroxyl groups of the polyol before the EO addition of 40% or more, preferably 60% or more, and more preferably 70% or more, the primary hydroxidation ratio of the terminal hydroxyl groups can be increased and a product in which x and y satisfy the above-mentioned relationship can be obtained at a small used amount of EO. As to the catalyst to be used for the above-mentioned EO addition, the above-mentioned catalyst (α) may be used as it is, or alternatively, a different catalyst that is usually used may be used instead of the catalyst (α).

Examples of the different catalyst include basic catalysts (sodium hydroxide, potassium hydroxide, cesium hydroxide, potassium carbonate, triethylenediamine),
acid catalysts (boron trifluoride, tin chloride, triethylaluminum, heteropolyacid), zinc hexacyanocobaltate, phosphazene compounds. Among these, basic catalysts are preferred. The used amount of the catalyst, which is not particularly limited, is preferably from 0.0001 to 10% by weight, and more preferably from 0.001 to 1% by weight relative to a polymer to be formed.

As to the polyol (a) to be used for the present invention, two or more kinds maybe used in combination. The average number of functional groups per molecule of the (a) is preferably from 2 to 6, and more preferably from 2.5 to 4.5, from the viewpoint of the physical properties (the permanent compression set, elongation) of a polyurethane. The hydroxyl value of the (a) is preferably from 15 to 65, and more preferably from 18 to 40.

The hydroxyl group equivalent of the polyol (a) is preferably from 200 to 4,000 and more preferably from 400 to 3,000 from the viewpoints of the viscosity of a polymer polyol and the mechanical physical properties of a polyurethane.

The hydroxyl value is measured in accordance with JIS K1557-1: 2007. The hydroxyl group equivalent is calculated by dividing 56100 by this hydroxyl value [the weight (mg) of potassium hydroxide equivalent to hydroxyl groups contained in 1 g of a sample] . These are applied also to the hydroxyl values and the hydroxyl group equivalents described hereinafter.

The Mn of the polyol (a) is preferably from 500 to 20,000, more preferably from 1,200 to 15,000, and particularly preferably from 2,000 to 9,000, from the viewpoint of the mechanical physical properties of a polyurethane, that a polymer polyol comes to have a low viscosity, and the handleability of a polymer polyol.

The average number x of moles of EO added per active hydrogen atom of the polyol (a) is 20 or less, preferably 15 or less, more preferably 12 or less, and most preferably 10 or less, from the viewpoint of the physical properties of a urethane.

The primary hydroxidation ratio y (%) of the terminal hydroxyl groups of the polyol (a) is 40% or more, and x and y (%) satisfy the relationship of the following formula (1) when x is from 10 to 20 and the relationship of the following formula (2) when x is less than 10.

$$y \geq 0.328x + 90.44 \qquad (1)$$

$$y \geq 42x^{0.47}(1 - x/41) \qquad (2)$$

If x, y and the relationship between x and y are within the above-mentioned ranges, both hydrophobicity and reactivity become good.

In the present invention, the primary hydroxidation ratio of terminal hydroxyl groups is determined by a $^1$H-NMR method after subjecting a sample to a pretreatment of esterification beforehand. The details of the $^1$H-NMR method are explained concretely below.

<Sample preparation method>

About 30 mg of a sample to be measured is weighed in a sample tube for $^1$H-NMR of 5 mm in diameter and then is dissolved by the addition of about 0.5 ml of a deuteration solvent. Then, about 0.1 ml of trifluoroacetic anhydride is added, followed by leaving at rest at 25°C for about 5 minutes to convert a polyol to a trifluoroacetic acid ester thereof, and the product is used as a sample for analysis. Examples of the deuteration solvent include deuterated chloroform, deuterated toluene, deuterated dimethylsulfoxide, deuterated dimethylformamide, and solvents capable of dissolving a sample can be selected properly.

<NMR measurement>

$^1$H-NMR measurement is performed under ordinary conditions.

<Method for calculating the primary hydroxidation ratio of terminal hydroxyl groups>

Signals originated in a methylene group to which a primary hydroxyl group bonds are observed near 4.3 ppm, and signals originated in a methine group to which a secondary hydroxyl group bonds are observed near 5.2 ppm. Therefore, the primary hydroxidation ratio of terminal hydroxyl groups is calculated by the following formula:

$$\text{Primary hydroxidation ratio (\%)} = [r/(r + 2s)] \times 100$$

wherein

r: an integral value of a signal near 4.3 ppm that is originated in a methylene group to which a primary hydroxyl group bonds, and

s: an integral value of a signal near 5.2 ppm that is originated in a methine group to which a secondary hydroxyl group bonds.

The polyol (PL), which contains the above-mentioned polyol (a) as an essential component, may contain a different polyol (a2). As the (a2), there can be used polyols that do not correspond to the polyol (a) and that are publicly known polyols to be used for the production of polymer polyols {those disclosed in, for example, JP-A Nos. 2005-162791, 2004-018543, and 2004-002800 (corresponding U.S. Patent Application: US 2005/245724 A1)},

Specific examples of the polyol (a2) include compounds having structures formed by adding an AO to the above-mentioned active hydrogen-containing compounds, and mixtures thereof. Among these, what are preferred from the viewpoint of mechanical physical properties of a polyurethane are AO adducts of polyhydric alcohols.

The above-mentioned AO includes the examples listed previously. From the viewpoint of the mechanical physical properties of a polyurethane to be obtained, C2 to 8 AOs are preferred among those AOs, more preferred are EO, PO, 1,2-, 2,3-, and 1,3-butylene oxide, tetrahydrofuran, styrene oxide, and combined use of two or more kinds of these (block addition and/or random addition), and particularly preferred are PO or combined use of PO and EO [the content of EO is 25% by weight or less, preferably from 1 to 20% by weight, based on the weight of the (PL)].

Specific examples of the above-mentioned AO adduct include PO adducts of publicly known active hydrogen-containing compounds {JP-A Nos. 2005-162791 and 2004-002800 (corresponding U.S. Patent Application: US 2005/245724 A1)}, and products produced by adding PO to another AO (preferably EO) in the above-mentioned modes (1) to (6) described for the polyol (a).

As to the polyol (a2) to be used for the present invention, two or more kinds may be used in combination. The average number of functional groups per molecule, the hydroxyl group equivalent, the hydroxyl value, and the Mn of the polyol (a2) are the same as those of the polyol (a) mentioned above and their preferable ranges are also the same.

From the viewpoint of mechanical physical properties of a polyurethane to be obtained, the content (% by weight) of the polyol (a) in the polyol (PL) is preferably from 20 to 100, more preferably from 30 to 100, and even more preferably from 40 to 100, based on the weight of the (PL).

The average number of functional groups per molecule, the hydroxyl group equivalent, the hydroxyl value, and the Mn of the polyol (PL) are the same as those of the polyol (a) mentioned above and their preferable ranges are also the same.

As to the total degree of unsaturation t and the hydroxyl group equivalent s of the polyol (PL), it is preferable, from the viewpoints of the mechanical strength and the mechanical physical properties of a polyurethane, that s be from 500 to 1,800 and the relationship of the following formula (3) be satisfied.

$$t \leq 3 \times 10^{-5}s - 0.0006 \quad (3)$$

Here, the total degree of unsaturation t originates in the unsaturated group-containing by-product generated by a side reaction that occurs when producing the polyol (PL).

The total degree of unsaturation t is determined by the method described in JIS K1557-3: 2007 after subjecting a polyol acetylated with trifluoroacetic anhydride (TFA) and a non-acetylated polyol, respectively, to $^1$H-NMR measurement, and the unit thereof is meq/g.

The unsaturated group-containing by-product generated in the production of the (PL) is a product generated with the reaction of PO addition. Therefore, that the total degree of unsaturation is large in the (PL) means that the number of hydroxyl groups of some molecules decreases through a side reaction during the production of the (PL), so that the number of hydroxyl groups per molecule has a distribution. In other words, it means that the number of moles of an AO added per molecule has a distribution, so that the molecular weight distribution of the (PL) is broadened. There is a tendency that the lower the total degree of unsaturation, the more excellent the mechanical strength of a polyurethane.

Therefore, the above-mentioned formula (3) means that the degree of unsaturation is equal to or smaller than a specific value in comparison to the hydroxyl group equivalent, in other words, that the molecular weight distribution of the (PL) is not broad in comparison to the hydroxyl group equivalent of the (PL).

In order for the polyol (PL) to satisfy the above-mentioned formula (3), it is preferred to make the amount of the polyol (a) to be used large and it is preferred to add PO to an active hydrogen-containing compound in the presence of the above-mentioned catalyst ($\alpha$).

The polymer polyol (A) of the present invention is obtained by polymerizing an ethylenically unsaturated compound (E) in the polyol (FL) to generate polymer fine particles (JR).

As the ethylenically unsaturated compound (E), styrene (henceforth, abbreviated as St), acrylonitrile (henceforth, abbreviated as ACN), other ethylenically unsaturated monomers (e) can be used. As to the (E), it is preferable to use St and/or ACN as an essential component.

From the viewpoints of the discoloration of a polyurethane and the content of coarse particles, the content (% by weight) of St is preferably from 49 to 100, more preferably from 51 to 91, even more preferably from 57 to 82, and most preferably from 66 to 78, based on the total weight of the (E).

From the same viewpoint as above, the content (% by weight) of ACN is preferably from 0 to 51, more preferably from 9 to 49, even more preferably from 18 to 43, and most preferably from 22 to 34, based on the total weight of the (E).

From the same viewpoint as above, the weight ratio between ST and ACN (St : ACN) is preferably from 100 : 0 to 49 : 51, more preferably from 57 ; 43 to 82 : 18, and most preferably from 78 : 22 to 66 : 34.

The other ethylenically unsaturated monomers (e) are not particularly limited as long as they are monomers of C2 or more, have a number-average molecular weight (henceforth, abbreviated as an Mn) {the measurement of Mn is done by a gel permeation chromatography (GPC) method} of less than 1,000, and are copolymerizable with St and/or ACN, and monofunctional monomers mentioned below {unsaturated nitriles (e1), aromatic ring-containing monomers (e2), (meth)acrylates (e3), polyoxyalkylene ethers of $\alpha$-alkenyl group-containing compounds and AO adducts of unsaturated esters having a hydroxyl group (e4), and other ethylenically unsaturated monomers (e5)}, polyfunctional monomers (e6) can be used. These may be used solely, or two or more kinds of them may be used in combination.

Examples of the (e1) include methacrylonitrile.

Examples of the (e2) include $\alpha$-methylstyrene, hydroxystyrene, chlorostyrene.

Examples of the (e3) include alkyl (meth)acrylates (the alkyl group is of C1 to 24), e.g., methyl (meth) acrylate, butyl (meth)acrylate, docosyl (meth)acrylate; hydroxypolyoxyalkylene (the alkylene group is of C2 to 8) mono(meth)acrylate.

It is noted that a (meth) acrylate means an acrylate and/or a methacrylate. For (meth) acrylic acid, (meth)allyl, and the like referred to henceforth, the same notation is used.

Examples of the polyoxyalkylene ether of the $\alpha$-alkenyl group-containing compound of the (e4) include AO adducts of C3 to 24 unsaturated alcohols, and terminal-unsaturated alcohols are preferably used as the unsaturated alcohols. Examples of the terminal-unsaturated alcohols include allyl alcohol, 2-buten-1-ol, 3-buten-2-ol, 3-buten-1-ol, 1-hexen-3-ol.

Examples of the AO adducts of unsaturated esters having a hydroxyl group include AO adducts of C3 to 24 unsaturated esters having a hydroxyl group, and examples of the unsaturated compound esters having a hydroxyl group include hydroxyethyl (meth)acrylate, hydroxypropyl (meth)acrylate.

Examples of the above-mentioned AO include those of C2 to 12, for example, EO, PO, BO, tetrahydrofuran (henceforth, abbreviated as THF), and combinations of two or more kinds of these (random addition and/or block addition). The AO is preferably PO and/or EO from the viewpoints of dispersion stability and viscosity.

The number of moles of an AO added is preferably from 1 to 9, more preferably from 1 to 6, and even more preferably from 1 to 3, from the viewpoints of dispersion stability and viscosity.

Preferred other ethylenically unsaturated monomers (e5) include C2 to 24 ethylenically unsaturated monomers, examples of which include vinyl group-containing carboxylic acids, such as (meth) acrylic acid; aliphatic hydrocarbon monomers, such as ethylene and propylene; fluorine-containing vinyl monomers, such as perfluorooctylethyl methacrylate and perfluorooctylethyl acrylate; nitrogen-containing vinyl monomers, such as diaminoethyl methacrylate and morpholinoethyl methacrylate; vinyl-modified silicone; cyclic olefins and cyclic dienes, such as norbornene, cyclopentadiene, and norbornadiene.

Preferred polyfunctional monomers (e6) include C8 to 40 polyfunctional monomers, examples of which include divinylbenzene, ethylene di (meth)acrylate, polyalkylene oxide glycol di(meth)acrylate, pentaerythritol triallyl ether, trimethylolpropane tri(meth)acrylate.

Among (e1) to (e6), (e3), (e4), and (e6) are preferred from the viewpoints of the viscosity of a polymer polyol and the physical properties of a polyurethane, (e4) and (e6) are more preferred, PO and/or EO adducts of terminal-unsaturated alcohol s and bifunctional monomers are particularly preferred, and PO adducts of allyl alcohol and divinylbenzene are most preferred.

The polymer polyol (A) of the present invention is a polymer polyol in which polymer fine particles (JR) having an ethylenically unsaturated compound (E) as a constituent unit are contained in a polyol (PL), and it is characterized in that the volume average particle diameter (R) of the polymer fine particles (JR) is from 0.1 to 1.5 $\mu$m.

From the viewpoints of the viscosity of a polymer polyol and the physical properties of a polyurethane, it is preferably from 0.25 to 1.2 $\mu$m, more preferably from 0.3 to 1.1 $\mu$m, and particularly preferably from 0.4 to 0.9 $\mu$m. If it is less than 0.1 $\mu$m, the viscosity of a polymer polyol becomes high and if it exceeds 1. 5 $\mu$m, clogging of a polyurethane foam become prone to occur easily in a discharge head and the physical properties (especially, hardness) of a polyurethane will deteriorate.

The volume average particle diameter is measured by the method described later.

The shape of the polymer fine particles (JR), which is not particularly limited and may be any shape, including a spherical shape, a spheroidal shape and a flat plate-like shape, is preferably a spherical shape from the viewpoint of the mechanical physical properties of a polyurethane.

The content (% by weight) of the polymer fine particles (JR) in the polymer polyol (A) is preferably from 30 to 75, more preferably from 32 to 60, particularly preferably from 35 to 57, and most preferably from 38 to 55, from the viewpoints of the mechanical physical properties of a polyurethane and the prevention of flocculation of the (JR) in the polymer polyol. The content of the (JR) is measured by the following method.

<Content of polymer fine particles (JR)>

About 5 g of a polymer polyol is weighed precisely into a 50 ml centrifugation tube made of SUS for centrifugal separation, and the weight is defined as the weight (W1) of the polymer polyol. The polymer polyol is diluted by the addition of 15 g of methanol. Using a cooling centrifugal separator [model: GRX-220, manufactured by TOMY SEIKO CO., LTD.], centrifugal separation is performed at 20°C, 18,000 rpm, for 60 minutes. The supernatant liquid is removed using a glass pipette. The remaining sediment is diluted by the addition of 15 g of methanol, and the operations of performing centrifugal separation and removing a supernatant liquid in the same manner as above are repeated further three times. The sediment remaining in the centrifugation tube is dried under a reduced pressure of from 2,666 to 3,999 Pa (from 20 to 30 torr) at 60°C for 60 minutes, followed by measuring the weight of the dried sediment, which weight is to be defined as (W2). The value calculated by the following formula is defined as the polymer fine particles content (% by weight).

```
Polymer fine particles content (% by weight) = (W2) ×

100/(W1)
```

The content (% by weight) of the polyol (PL) in the polymer polyol (A) is preferably from 25 to 70, more preferably from 40 to 68, particularly preferably from 43 to 65, and most preferably from 45 to 62, from the viewpoints of the prevention of flocculation of the polymer fine particles (JR) and the mechanical physical properties of a polyurethane to be obtained.

In the present invention, the arithmetic standard deviation of the particle diameter of the polymer fine particles (JR) is preferably 0.6 or less, more preferably from 0.1 to 0.6, particularly preferably from 0.15 to 0.6, and most preferably from 0.20 to 0.58, from the viewpoints of the ease of the production of a polymer polyol, the mechanical physical properties of a polyurethane, and the reduction in clogging of a polyurethane production apparatus.

The above-mentioned arithmetic standard deviation on the volume basis refers to an arithmetic standard deviation calculated by the following formula from the particle size distribution on the volume basis in accordance with the Mie scattering theory (Light Scattering by Small Particles, Dover Publ., 1981). The particle size distribution on the volume basis in the measurement and the calculation is determined by the range of from 0.040 to 262 $\mu$m in 65 fractions (65 fractions of 0.040-0.044 $\mu$m, 0.044-0.050 $\mu$m, 0.051-0.057 $\mu$m, 0.058-0.066 $\mu$m, 0.067-0.075 $\mu$m, 0.076-0.086 $\mu$m, 0.087-0.099 $\mu$m, 0.100-0.114 $\mu$m, 0.115-0.130 $\mu$m, 0.131-0.149$\mu$m, 0.150-0.171 $\mu$m, 0.172-0.196 $\mu$m, 0.197-0.225 $\mu$m, 0.226-0.258 $\mu$m, 0.259-0.295 $\mu$m, 0.296-0.338 $\mu$m, 0.339-0.388 $\mu$m, 0.389-0.449$\mu$m, 0.450-0.509 $\mu$m, 0.510-0.583 $\mu$m, 0.584-0.668 $\mu$m, 0.669-0.765 $\mu$m, 0.766-0.876 $\mu$m, 0.877-1.004 $\mu$m, 1.005-1.150 $\mu$m, 1.151-1.317 $\mu$m, 1.318-1.509 $\mu$m, 1.510-1.728 $\mu$m, 1.729-1.980 $\mu$m, 1.981-2.268 $\mu$m, 2.269-2.598 $\mu$m, 2.599-2.975 $\mu$m, 2.976-3.408 $\mu$m, 3.409-3.904 $\mu$m, 3.905-4.471 $\mu$m, 4.472-5.121 $\mu$m, 5.122-5.866 $\mu$m, 5.867-6.719 $\mu$m, 6.720-7. 696 $\mu$m, 7.697-8.815 $\mu$m, 8.816-10.096 $\mu$m, 10.097-11.564 $\mu$m, 11.565-13.245 $\mu$m, 13.246-15.171 $\mu$m, 15.172-17.376 $\mu$m, 17.377-19.903 $\mu$m, 19.904-22.796 $\mu$m, 22.797-26.110 $\mu$m, 26.111-29.906 $\mu$m, 29.907-34.254 $\mu$m, 34.255-39.233 $\mu$m, 39.234-44.937 $\mu$m, 44.938-51.470 $\mu$m, 51.471-58.952 $\mu$m, 58.953-67.522 $\mu$m, 67.523-77.338 $\mu$m, 77.339-88.582 $\mu$m, 88.583-101.459 $\mu$m, 101.460-116.209 $\mu$m, 116.210-133.102 $\mu$m, 133.103-152.452 $\mu$m, 152.453-174.615 $\mu$m, 174.616-199.999 $\mu$m, 200.000-229.074 $\mu$m, and 229.075-262.375 $\mu$m, wherein, for example, the expression "0.040-0.044 $\mu$m" means "greater than 0.040 $\mu$m and not greater than 0.044 $\mu$m").

```
Arithmetic standard deviation

= [Σ{(X(J) - volume average particle diameter (μm)}² ×

q(J)/100]^{1/2}
```

$$\text{Volume average particle diameter } (\mu m) = \Sigma\{q(J) \times X(J)\}/\Sigma\{q(J)\}$$

In the formulae, J is a fraction number (from 1 to 65) of the particle diameter range, i.e., the serial number of a particle diameter range among the above-mentioned 65-divided particle diameter ranges which are numbered consecutively in order from the smallest value, X(J) is the central value of the particle diameter range of the fraction number J, and q(J) is the frequency (% by volume) of the particles in the particle diameter range of the fraction number J.

The content (% by weight) of coarse particles in the polymer polyol (A) is from 0 to $30 \times 10^{-4}$, preferably from 0 to $20 \times 10^{-4}$, more preferably from 0 to $10 \times 10^{-4}$, and particularly preferably from 0 to $3 \times 10^{-4}$, based on the weight of the polymer polyol (A), from the viewpoint of the reduction in clogging in the polyurethane production apparatus.

Here, a coarse particle means a polymer fine particle that has a particle diameter of 0.10 mm or more.

The ratio between the content (% by weight) of a soluble polymer and the content (% by weight) of polymer fine particles in the polymer polyol (A) (soluble polymer content/polymer fine particle content) is preferably 1/10 or less, more preferably 1/12 or less, particularly preferably 1/15 or less, and most preferably 1/20 or less, from the viewpoints of the reduction in the volume average particle diameter of the polymer fine particles (JR), the mechanical physical properties of a polyurethane to be obtained, and the viscosity of the polymer polyol. The soluble polymer is a polymer that has been produced by polymerizing an ethylenically unsaturated compound (E) and that dissolves in a polyol (PL), and the content thereof is measured by the following method.

<Method for measuring soluble polymer content (% by weight)>

(Measurement of the content of particles precipitated in methanol)

About 5 g of a polymer polyol is weighed precisely into a 50 ml centrifugation tube for centrifugal separation, and the weight is defined as the weight (W3) of the polymer polyol. To this, 50 g of methanol is added and mixed. Using a cooling centrifugal separator [model: H-9R, manufactured by KOKUSAN Co., Ltd.], centrifugal separation is performed at 20°C, 18,000 rpm, for 60 minutes. The supernatant liquid is removed using a glass pipette. To the remaining sediment, 50 g of methanol is added and mixed, and the operations of performing centrifugal separation and removing a supernatant liquid in the same manner as above are repeated further three times. The sediment remaining in the centrifugation tube is dried under a reduced pressure of from 2,666 to 3,999 Pa (from 20 to 30 torr) at 60°C for 60 minutes, followed by measuring the weight of the dried sediment, which weight is to be defined as (W4). The value calculated by the following formula is defined as the content (% by weight) of particles precipitated in methanol.

$$\text{Content (\% by weight) of particles precipitated in methanol} = (W4) \times 100/(W3)$$

(Measurement of the content of particles precipitated in xylene)

The content (% by weight) of particles precipitated in xylene is calculated in the same manner as in the above-mentioned measurement of the content of precipitated particles, except for using xylene instead of methanol.

(Calculation of soluble polymer content)

The value calculated by the following formula is defined as the soluble polymer content (% by weight).

$$\text{Soluble polymer content (\% by weight)} = \text{content (\% by weight) of particles precipitated in methanol} - \text{content (\% by weight) of particles precipitated in xylene}$$

The adjustment of the ratio between the soluble polymer content (% by weight) and the polymer content (% by weight) to the above-mentioned range can be achieved by adopting a preferable method as a method for producing a polymer polyol, which is described later.

The viscosity (mPa•s) of the polymer polyol (A) is preferably from 1,250 to 12,000, more preferably from 1,500 to 10,000, and most preferably from 2,500 to 8,000, from the viewpoint of moldability.

From the viewpoint of the moldability of a polyurethane, it is preferable for the polymer polyol (A) that the content v (% by weight) of polymer fine particles (JR) in the polymer polyol and the viscosity w (mPa•s) of the polymer polyol satisfy the following formulae (4) and (5), and it is more preferable that they satisfy the formulae (4) and (6).

$$w \geq 250v - 5000 \quad (4)$$

$$w \leq 450v - 8400 \quad (5)$$

$$w \leq 450v - 8600 \quad (6)$$

The viscosity of a polymer polyol is measured by the method described in JIS K1557-5: 2007 at 25°C by using a Brookfield-type viscometer.

In order to make the above-mentioned relationship between the viscosity and the content be satisfied, the hydroxyl group equivalent of the (PL) to be used is preferably from 500 to 1,800, more preferably from 800 to 1,600, and particularly preferably from 1,000 to 1,500.

The polymer polyol (A) of the present invention is obtained by a method comprising polymerizing an ethylenically unsaturated compound (E) in the polyol (PL) to generate polymer fine particles (JR).

Although examples of the method of the polymerization include radical polymerization, coordinated anionic polymerization, metathesis polymerization, Diels-Aider polymerization, radical polymerization is preferred from the industrial viewpoints

For the radical polymerization, a method of polymerizing an ethylenically unsaturated compound (E) in the presence of a radical polymerization initiator (K) in a polyol (PL) containing a dispersing agent (B) (the method disclosed in U. S. Patent No. 3383351), for example, can be used.

As the radical polymerization initiator (K), azo compounds, peroxides (agents disclosed in JP-A Nos. 2005-162791 and 2004-002800 (corresponding U.S. Patent Application: US 2005/245724 A1)} may be used. From the viewpoints Of the polymerization ratio and the polymerization time of the (E) and the productivity of a polymer polyol, the 10-hour half-life temperature of the (K) is preferably from 30 to 150°C, more preferably from 40 to 140°C, and particularly preferably from 50 to 130°C.

The amount (% by weight) of the (K) to be used is preferably from 0.05 to 20, more preferably from 0.1 to 5, and particularly preferably from 0.2 to 2, based on the total weight of the (E), from the viewpoints of the degree of polymerization of the (E) and the mechanical physical properties of a polyurethane to be obtained.

As the dispersing agent (B), those having an Mn of 1,000 or more (preferably, from 1,000 to 10,000), e.g., publicly known dispersing agents which have been used for the production of a polymer polyol {those disclosed in JP-A Nos. 2005-162791 and 2004-002800 (corresponding U.S. Patent Applications US 2005/245724 A1)} can be used, and examples of the (B) include reactive dispersing agents having an ethylenically unsaturated group copolymerizable with St or ACN and non-reactive dispersing agents that do not copolymerize with St or ACN.

In the present invention, the reactive dispersing agent containing an ethylenically unsaturated group has an Mn of 1, 000 or more, and it is distinguished from the ethylenically unsaturated compound (E), which has an Mn of less than 1,000.

Specific examples of the dispersing agent (B) include the following:

[1] modified polyols obtained by making at least part of the hydroxyl groups of the polyol (PL) react with an alkylene dihalide, such as methylene dihalide, to increase the molecular weight (those disclosed in JP-A No. 07-196749);

[2] ethylenically unsaturated group-containing modified polyols obtained by making the modified polyols of [1] further react with ethylenically unsaturated group-containing compounds {those disclosed in JP-A Nos. 08-333508 and 2004-002800 (corresponding U.S. Patent Application: US 2005/245724 A1)};

[3] graft-type polymers having, as side chains, two or more (PL)-philic segments having a solubility parameter difference from the polyol (PL) of 1 or less, and also having, as a main chain, a polymer fine particle (JR)-philic segment having a solubility parameter difference from a polymer of an ethylenically unsaturated compound of 2 or less (those disclosed in JP-A No. 05-059134);

[4] a dispersing agent using, in combination, a vinyl-based oligomer that is at least partly soluble in a polyol (PL) and that has a weight average molecular weight (henceforth, abbreviated as an Mw) [the measurement is done by a gel permeation chromatography (GPC) method] of from 1,000 to 30,000 and an ethylenically unsaturated group-containing modified polyol produced by reacting the oligomer with the modified polyol of [1] (the one disclosed in JP-A No. 09-77968); and

[5] a dispersing agent composed of a nitrogen-containing bond-containing unsaturated polyol in which a polyol (PL) has been bonded to a monofunctional active hydrogen-containing compound having at least one ethylenically unsaturated group via a polyisocyanate (the one disclosed in JP-A No. 2002-308920 (corresponding U.S. Patent No. 6756414)).

Among these, [2], [4], and [5] are preferred and [5] is particularly preferred from the viewpoint of the particle diameter of the polymer fine particles (JR).

The amount (% by weight) of the dispersing agent (B) to be used is preferably from 2 to 20, and more preferably from 5 to 15 based on the weight of the polyol (PL) from the viewpoints of the particle diameter of the polymer fine particles (JR) and the viscosity of the polymer polyol.

In the radical polymerization, a diluent solvent (c) may be used as occasion demands. Examples of the (c) include C6 to 10 aromatic hydrocarbons (toluene, xylene); C5 to 15 saturated aliphatic hydrocarbons (hexane, heptane, normal decane); C5 to 30 unsaturated aliphatic hydrocarbons (octene, nonene, decene); and other publicly known solvents (for example, those disclosed in JP-A No. 2005-162791). Among the (c), aromatic hydrocarbons are preferred from the viewpoint of the viscosity of a polymer polyol.

The amount (% by weight) of the (c) to be used is preferably from 0.1 to 50, and more preferably from 1 to 40 based on the total weight of the ethylenically unsaturated compound (E) from the viewpoints of the viscosity of a polymer polyol and the mechanical physical properties of a polyurethane. Although the (c) may remain in a polymer polyol after the completion of the polymerization reaction, it is preferable, from the viewpoint of the mechanical physical properties of a polyurethane, to remove the (c) by reduced pressure stripping or the like after the polymerization reaction.

In the radical polymerization, a chain transfer agent (g) may be used as occasion demands. Examples of the (g) include chain transfer agents such as C1 to 20 aliphatic thiols (n-dodecanethiol, mercaptoethanol) {those disclosed in JP-A Nos. 2005-162791 and 2004-002800 (corresponding U. S. Patent Application: US 2005/245724 A1)}.

The amount (% by weight) of the (g) to be used is preferably from 0.01 to 2, and more preferably from 0.1 to 1 based on the total weight of the ethylenically unsaturated compound (E) from the viewpoints of the viscosity of a polymer polyol and the mechanical physical properties of a polyurethane to be obtained.

From the viewpoints of productivity and the prevention of the decomposition of a polyol, the polymerization temperature is preferably from 100 to 200°C, more preferably from 110 to 180°C, and particularly preferably from 120 to 160°C.

As the production method for obtaining the polymer polyol of the present invention, a batch polymerization method and a continuous polymerization method are preferred, and a multistage continuous polymerization method mentioned below is more preferred.

As the batch polymerization method and the continuous polymerization method, publicly known methods for producing a polymer polyol {those disclosed in JP-A Nos. 2005-162791, 8-333508, and 2004-002800 (corresponding U.S. Patent Application: US 2005/245724 A1)} can be used.

The multistage continuous polymerization method is a method for producing a polymer polyol, the method comprising a first step of obtaining a polymer polyol by polymerizing a monomer-containing mixed liquid (M1) containing a polyol (PL), an ethylenically unsaturated compound (E), a radical polymerization initiator (K), and a dispersing agent (B) by a continuous polymerization method, and a second step of polymerizing a monomer-containing mixed liquid (M2) containing a polyol (PL), an ethylenically unsaturated compound (E), a radical polymerization initiator (K), a dispersing agent (B), and the polymer polyol obtained in the first step by a continuous polymerization method.

In the multistage continuous polymerization method, the continuous polymerization method is a method of supplying a monomer-containing mixed liquid continuously to a reaction vessel to obtain a polymer polyol continuously, and polymerization may be performed by a semibatch polymerization method or alternatively in a pipe of a continuous flow system.

In the multistage continuous polymerization method, a polymer polyol is obtained by polymerizing a monomer-containing mixed liquid (M1) that contains a polyol (PL), an ethylenically unsaturated compound (E), a radical polymerization initiator (K), and a dispersing agent (B) in the first step. Subsequently, in the second step, a polymer polyol is obtained by polymerizing a monomer-containing mixed liquid (M2) that contains a polyol (PL), an ethylenically unsaturated compound (E), a radical polymerization initiator (K), a dispersing agent (B), and the polymer polyol obtained in the first step to produce a polymer polyol and, as occasion demands, subjecting it to demonomer/solvent removal treatment to obtain a polymer polyol.

In the second step, a polymer polyol having a small particle diameter and having a narrow particle size distribution can be obtained by obtaining a monomer-containing mixed liquid (M2) prepared by adding a polyol (PL), an ethylenically unsaturated compound (E), a radical polymerization initiator (K), and a dispersing agent (B) to the polymer polyol obtained in the first step, and polymerizing the liquid. Since a (PL) and part of a (B) are contained in the polymer polyol obtained in the first step, it is not necessarily required to add a (PL) or a (B).

Although the compositions of the (PL), the (E), the (K), and the (B) to be used in the first step and the second step may be either the same or different from each other, it is preferable that they are of the same or substantially the same compositions.

The content of the ethylenically unsaturated compound (E) in the monomer-containing mixed liquid (M1) before the commencement of the polymerization of the first step is preferably from 10 to 25% by weight, and more preferably from 12 to 24% by weight based on the weight of the (M1), from the viewpoints of productivity and reduction in the volume average particle diameter of the polymer fine particles in a polymer polyol.

The content of the ethylenically unsaturated compound (E) in the monomer-containing mixed liquid (M2) before the commencement of the polymerization of the second step is preferably from 26 to 42% by weight, and more preferably from 28 to 41% by weight from the viewpoints of productivity and reduction in the volume average particle diameter of the polymer fine particles in a polymer polyol.

In the multistage continuous polymerization method, it is preferable, from the viewpoint of reduction in the volume average particle diameter (R) of the polymer fine particles in a polymer polyol, to perform the first step in the presence of fine particles (P1). The (P1) is not particularly limited as long as it is of an inorganic or organic particulate substance, and either a single kind of substance or two or more kinds of substances may be used in accordance with the purpose.

From the viewpoints of the viscosity of a polymer polyol and the physical properties (including degree of cutting elongation) of a polyurethane, it is preferable that the fine particles (P1) be fine particles composed of a polymer produced by polymerizing an ethylenically unsaturated compound (E).

From the viewpoints of the viscosity of a polymer polyol and the physical properties (including degree of cutting elongation) of a polyurethane, the volume average particle diameter of the fine particles (P1) is preferably from 0.01 $\mu$m to 1.0 $\mu$m, more preferably from 0.05 to 0.7 $\mu$m, and further preferably from 0.1 to 0.5 $\mu$m.

The volume average particle diameter of the (P1) can be measured by a laser diffraction/scattered light-type particle size distribution analyzer (e.g., LA-750, manufactured by HORIBA, Ltd.).

It is preferable that the fine particles (P1) have been dispersed in the polyol (PL) in advance.

In the case of dispersing the fine particles (P1) in the polyol (PL), publicly known dispersing machines, such as a batch emulsifying machine, a continuous emulsifying machine, a film emulsifying machine, a vibratory emulsifying machine, and an ultrasonic emulsifying machine, can be used.

In the case of dispersing the fine particles (P1) in the polyol (PL), publicly known (JP-A No. 2003-12706) emulsifiers and the above-mentioned dispersing agents (B) may also be used.

When dispersing the fine particles (P1) in the polyol (PL) in advance, the fine particle content (% by weight) is preferably from 7 to 30, more preferably from 10 to 25, and particularly preferably from 12 to 20 based on the weight of the (P1) and the (PL), from the viewpoints of the physical properties of a polyurethane and the particle diameter of a polymer.

The temperature upon dispersing is usually from 0 to 150°C (under pressure), preferably from 5 to 98°C.

A material in which the (P1) has been dispersed in the (PL) in advance can be obtained also by polymerizing an ethylenically unsaturated compound (E) in the presence of a radical polymerization initiator (K) and, if necessary, a dispersing agent (B) in the polyol (PL), and this is preferred from the viewpoint of the storage stability of a polymer polyol. Moreover, from the viewpoint of the prevention of a polyurethane produced from scorching, it is preferable to use acrylonitrile and/or styrene as the ethylenically unsaturated compound (E) .

The polymer polyol obtained by polymerization may be subjected to demonomer/solvent removal treatment as occasion demands. As the demonomer/solvent removal treatment, publicly known (JP-A No. 2004-002800) methods can be applied, and a method of removing a residual ethylenically unsaturated compound and/or a diluent solvent (c) under reduced pressure or a method of distilling under reduced pressure with continuous addition of water (Japanese Examined Patent Publication No. 62-36052) is preferred, from the viewpoint of the brightness of a polyurethane.

To the polymer polyol (A) of the present invention may be added a solvent and a flame retardant as occasion demands. As the solvent, solvents the same as the above-mentioned diluent solvent (c) can be used, and unsaturated aliphatic hydrocarbons and aromatic hydrocarbons are preferred from the viewpoints of the viscosity of a polymer polyol.

As the flame retaxdant, various flame retardants (those disclosed in JP-A No. 2005-162791, phosphates, halogenated phosphates, melamine, phosphazene) can be used. From the viewpoint of the viscosity of a polymer polyol, flame retardants having a low viscosity (100 mPa•s or lower/25°C) are preferred, and tris (chloroethyl) phosphate and tris(chloropropyl) phosphate are more preferred among the halogenated phosphates.

The content (% by weight) of the solvent and that of the flame retardant in the polymer polyol (A), respectively, are preferably 10 or less, more preferably from 0.01 to 5, and particularly preferably from 0.05 to 3, based on the total weight of the polymer fine particles (JR) and the polyol (PL), from the viewpoints of the viscosity of a polymer polyol, the flame retardancy of a polyurethane, and the mechanical physical properties of the polyurethane to be obtained.

The polymer polyol (A) of the present invention can be used as a polyol to be used for the production of a polyurethane, such as a polyurethane elastomer or a polyurethane foam. That is, a polyurethane can be obtained by making the (A) or a polyol component (Po) containing the (A) and an isocyanate component (Is) containing a polyisocyanate [henceforth, a composition containing the (Po) and the (Is) may be referred to as a polyurethane forming composition] react by a publicly known method {a method disclosed in, for example, JP-ANo. 2004-263192 (corresponding U.S. Patent Application: US 2003/4217 A1)} or the like.

As the polyol component (Po) to be used for producing a polyurethane, it is permissible, as occasion demands and to an extent that the effect of the present invention is not inhibited, to use, in addition to the polymer polyol (A) of the present invention, publicly known polymer polyols other than polyols and the (A) as a raw material for producing a polyurethane.

As the polyol, the above-mentioned polyol (PL) or the like can be used, and polymer polyols disclosed in, for example, JP-A Nos. 2005-162791 and 2004-263192 (corresponding U.S. Patent Application: US 2003/4217 A1) can be used as the publicly known polymer polyols.

The amount (% by weight) of the polymer polyol (A) to be used in the polyol component (Po) is preferably from 10 to 100, more preferably from 15 to 90, particularly preferably from 20 to 80, and most preferably from 25 to 70, from the viewpoints of the mechanical physical properties of a polyurethane to be obtained and the viscosity of the polyol component.

As the isocyanate component (Is), publicly known polyisocyanates that have conventionally been used for the production of a polyurethane {those disclosed in JP-A Nos. 2005-162791 and 2004-263192 (corresponding U.S. Patent Application: US 2003/4217 A1)} can be used.

Among these, 2,4- and 2,6-tolylenediisocyanate (TDI), crude TDI (a residue formed at the time of purifying TDI) ; 4,4'- and 2,4'-diphenylmethanediisocyanate (MDI), and crude MDI (a residue formed at the time of purifying MDI) are preferred from the viewpoint of the mechanical physical properties of a polyurethane.

The NCO index in the production of a polyurethane [the equivalent ratio between NCO groups and active hydrogen atoms (NCO groups/active hydrogen atoms) $\times$ 100], which can be adjusted properly from the viewpoint of the mechanical physical properties of the polyurethane, is preferably from 80 to 140, more preferably from 85 to 120, and particularly preferably from 95 to 115.

In the production of a polyurethane, various catalysts for use for a urethanization reaction {those disclosed in JP-A Nos. 2005-162791 and 2004-263192 (corresponding U.S. Patent Application: US 2003/4217 A1)} can be used in order to promote a reaction. The amount (% by weight) of a catalyst to be used is preferably 10 or less, and more preferably from 0.001 to 5, based on the total weight of the polyurethane forming composition.

In producing a polyurethane foam, a foaming agent may be used. Examples thereof include water, HFC (hydrofluorocarbon), HCFC (hydrochlorofluorocarbon), methylene chloride, and those disclosed in JP-A Nos. 2006-152188 and 2004-263192 (corresponding U.S. Patent Application: US 2003/4217 A1).

The amount (% by weight) of the foaming agent to be used, which can be changed depending upon a desired density of a polyurethane foam and is not particularly limited, is preferably 20 or less, based on the total weight of a polyurethane forming composition.

In the production of a polyurethane foam, a foam stabilizer may be used. Examples of the foam stabilizer include those disclosed in, for example, JP-A Nos. 2005-162791 and 2004-263192 (corresponding U.S. Patent Application: US 2003/4217 A1), and silicone surfactants (e.g., polysiloxane-polyoxyalkylene copolymers) are preferred from the viewpoint of the uniformity of the cell diameter in a polyurethane foam.

The amount (% by weight) of the foam stabilizer to be used is preferably 5 or less, and more preferably from 0.01 to 2, based on the total weight of the polyurethane forming composition.

In the production of a polyurethane, a flame retardant may be used as occasion demands. Examples thereof include melamine, phosphates, halogenated phosphates, phosphazene, and those disclosed in, for example, JP-A Nos. 2005-162791 and 2004-263192 (corresponding U.S. Patent Application: US 2003/4217 A1).

The amount (% by weight) of the flame retardant to be used is preferably 30 or less, and more preferably from 0.01 to 10, based on the total weight of the polyurethane forming composition.

In the production of a polyurethane, at least one kind of additive selected from the group consisting of reaction retarding agents, colorants, internal mold release agents, antiaging agents, antioxidants, plasticizers, germicides, and fillers (including carbon black) may be used as occasion demands.

The production of a polyurethane can be performed by, for example, the methods disclosed in JP-A Nos. 2005-162791 and 2004-263192 (corresponding U.S. Patent Application: US 2003/4217 A1), and a one-shot process, a semi-prepolymer process, a prepolymer process are mentioned.

For the production of a polyurethane can be used production apparatuses that have been conventionally used (low-pressure or high-pressure apparatuses). In the case where no solvent is used, such an apparatus as a kneader or an extruder can be used, and in the production of a non-foamed or foamed polyurethane, a closed mold or an open mold can be used.

The use of the polymer polyol (A) of the present invention reduces clogging of a small opening of a production apparatus used for the production of a polyurethane to achieve easy maintenance, so that the productivity can be improved. Particularly, in foaming machines of a polyurethane foam, clogging in discharge heads decreases greatly and the productivity improves remarkably.

EXAMPLES

The present invention will be described more concretely below with reference to examples, to which the present invention is not limited. In the following, "%," "part(s)," and "ratio" mean "% by weight," "part(s) by weight," and "weight ratio," respectively, unless otherwise stated.

The compositions, the symbols, and the like of the raw materials used in examples and comparative examples are as follows.

(1) Polyol

Polyol (PL1-1): A polyol having a hydroxyl value of 56 and an internal EO unit content of 9%, produced by block addition in order of PO-EO-PO to glycerol. Terminal primarization ratio = 2 mol%. [Commercial name "SANNIX (registered trademark) GP-3030", manufactured by Sanyo Chemical Industries, Ltd.]

Polyol (PL1-2): A polyol having a hydroxyl value of 32 and a terminal EO unit content of 14%, produced by block addition in order of PO-EO to pentaerythritol. Terminal primarization ratio = 74 mol%. [Commercial name "POLYOL 50", manufactured by Sanyo Chemical Industries, Ltd.]

Polyol (PL1-3): A polyol having a hydroxyl value of 37 and a terminal EO unit content of 17.5%, produced by block addition in order of PO-EO to pentaerythritol. Terminal primarization ratio = 80 mol%.

Polyol (PL1-4): A polyol having a hydroxyl value of 216 and a terminal PO unit content of 56%, produced by adding PO to bisphenol A. Terminal primarization ratio = 1 mol%.

Polyol (PL1-5): A polyol having a hydroxyl value of 56 and a terminal EO unit content of 20%, produced by block addition in order of PO-EO to glycerol. Terminal primarization ratio = 74 mol%. [Commercial name "SANNIX (registered trademark) GL-3000", manufactured by Sanyo Chemical Industries, Ltd.]

(2) Radical polymerization initiator

K-1: 1,1'-Azobis(2-methylbutyronitrile)[Commercial name "V-59", manufactured by Wako Pure Chemical Industries, Ltd.]

(3) Dispersing agent

B-1: A reactive dispersing agent having a hydroxyl value of 20 and the number of unsaturated groups/the number of nitrogen-containing groups of 0.22, produced by joining 0.14 mol of the polyol (PL1-2) and 0.07 mol of 2-hydroxy methacrylate with 0.16 mol of TDI. [See JP-A No. 2002-308920.]

B-2: An ACN-St copolymerized oligomer-type non-reactive dispersing agent having a weight ratio between ACN and St of ACN : St = 70 : 30 and an Mw of 600,000. {This oligomer-type dispersing agent was used by mixing with the polyol (PL1-2) so that its content might become 10%. The hydroxyl value of this mixture = 29.0.}

(4) Polyisocyanate

TDI-80: Commercial name "CORONATE T-80" [manufactured by Nippon Polyurethane Industry Co., Ltd.]

CE-729: Commercial name "CE-729" [manufactured by Nippon Polyurethane Industry Co., Ltd.]

(5) Catalyst

Catalyst A: Commercial name "DABCO" (triethylenediamine) [manufactured by Nippon Nyukazai Co., Ltd.]
Catalyst B: Commercial name "Neostan U-28" (stannous octylate) [manufactured by Nitto Kasei Co., Ltd.]
Catalyst C: Commercial name "TEDAL-33" (triethylenediamine/dipropylene glycol = 33/67% by weight solution) [manufactured by Tosoh Corp.]
Catalyst D: Commercial name "TOYOCAT ET" (bis-2-dimethylaminoethyl ether/dipropylene glycol = 33/67% by weight solution) [manufactured by Tosoh Corp.]

(6) Foam stabilizer

Commercial name "SRX-280A" (a polyether siloxane polymer) [manufactured by Dow Corning Toray Silicone Co., Ltd.]
Commercial name "SZ-1311" (a polyether siloxane polymer) [manufactured by Nippon Unicar Co., Ltd.]
Commercial name "L-5309" (a polyether siloxane polymer) [manufactured by Nippon Unicar Co., Ltd.]

The methods of measurement and evaluation used in the examples are as follows.

<Volume average particle diameter>

A 50 ml glass beaker is charged with 30 ml of methanol and then is charged with 2 mg of a polymer polyol, followed by stirring with a stirrer piece of 2 cm in major axis and 0.5 cm in minor axis, at 400 rpm for 3 minutes by using a magnetic stirrer to mix them, forming a homogeneous liquid. The liquid is charged into a measuring cell within 5 minutes after the mixing, and then the volume average particle diameter on the volume basis is measured by using a laser diffraction/scattering-type particle size distribution analyzer [model: LA-750, manufactured by HORIBA, Ltd.].

<Coarse particle content>

About 300 g of a polymer polyol is weighed precisely into a 1-L beaker, and its weight is defined as a polymer polyol weight (W5). To this is added 300 g of methanol from which foreign matters have been removed by filtration through an industrial woven wire cloth with apertures of 0.10 mm (JIS G3556, the same is applied also hereinafter), yielding a homogeneous liquid. The homogeneous liquid is filtered through an industrial woven wire cloth with apertures of 0.10 mm, and coarse particles remaining on the wire cloth are washed with 300 g of methanol from which foreign matters have been removed. The washed coarse particles are dried in a circulation drier at 70°C for 30 minutes, and the weight of the dried coarse particles is measured and it is used as a coarse particle weight (W6) (weighed at a precision of up to four decimal places, the unit is g). The value calculated by the following formula is used as the content of coarse particles in the polymer polyol (the content of polymer fine particles having a particle diameter of 0.10 mm or more).

$$\text{Coarse particle content (\% by weight)} = (W6) \times 100/(W5)$$

<Filterability>

A polymer polyol (300 g) is heated to 70°C. An industrial woven wire cloth with apertures of 0.045 mm (JIS G3556) having been cut into the size of a filtering area is fixed to a Buchner funnel whose filtering area has a diameter of 96 mm, with an aluminum adhesive tape. The Buchner funnel is fixed to the top opening of a bell jar and is linked directly with a vacuum pump. A temperature-controlled polymer polyol is poured onto the wire cloth plane of the Buchner funnel within 30 seconds, and the vacuum pump [model TSW-300, manufactured by SATO VAC INC.] is actuated within 60 seconds from the pouring of the polymer polyol onto the wire cloth. Clocking is started at a time when the vacuum pump is actuated, and the time required until part of the wire cloth plane appears is defined as a filtration time. The weight of the polymer polyol after filtering is measured and this is defined as (W9). The value calculated by the following formula is defined as filterability.

$$\text{Filterability } (g/s \cdot cm^2)$$

$$= (W9) \ (g)/[\text{filtration time (sec)} \times \text{filtration area } [72.4 \ cm^2]]$$

Production Example 1 [Production of polyol (a-1)]

[First step]

A stainless steel autoclave equipped with a stirring device and a temperature controlling device was charged with 31 parts of glycerol and 2.1 parts of potassium hydroxide, and 687 parts of PO was dropped at a reaction temperature of from 90 to 110°C over 12 hours, followed by maturing at 100°C for 6 hours. After the product was cooled to 60°C, 29 parts of synthetic silicate (Kyoward 600, manufactured by Kyowa Chemical Industry Co., Ltd.) and 14 parts of water were charged and the mixture was treated at 60°C for 3 hours. After the mixture was cooled to 25°C and taken out of the autoclave, filtration through a filter of 1 $\mu$m was performed and then dehydration was performed under reduced pressure, so that a polyol intermediate (S-1) was obtained.

[Second step]

To a stainless steel autoclave equipped with a stirring device and a temperature controlling device, 718 parts of (S-1), 0.10 parts of tris(pentafluorophenyl)borane, and 232 parts of PO were dropped over 10 hours while controlling the charging reaction temperature so that it might be maintained at 65 to 75°C, followed by maturing at 70°C for 5 hours. Following the addition of water, propionaldehyde, which was a by-product, was distilled off together with water under normal pressure at 105 to 110°C for 4 hours. Then, while maintaining the temperature at 90 to 100°C and the pressure at 30 to 50 torr and bubbling water vapor continuously, the by-product propionaldehyde was distilled off together with water under reduced pressure for 5 hours. After stopping the bubbling of water vapor, 0 . 67 parts of potassium hydroxide was added, and the temperature was raised to 130°C for further 3 hours, and dehydration was performed while maintaining the pressure at 50 torr or lower. Then, 50 parts of EO was dropped over 3 hours while controlling the reaction temperature so that it might be maintained at 125 to 135°C, and then maturing was performed at 130°C for 2 hours. After the product was cooled to 60°C, 40 parts of synthetic silicate (Kyoward 600, manufactured by Kyowa Chemical Industry Co., Ltd.) and 20 parts of water were added and the mixture was treated at 60°C for 3 hours. After the mixture was cooled to 25°C and taken out of the autoclave, filtration through a filter of 1 $\mu$m was performed and then dehydration was performed under reduced pressure, so that a liquid polyol (a-1) was obtained. The yield, the Mn, the terminal primarization ratio, and the hydroxyl value of (a-1) were measured and shown in Table 1. Moreover, the average number of moles of ethylene oxide added per active hydrogen atom was calculated from the charged amount thereof and shown in Table 1.

Production Examples 2 to 11 [Production of polyols (a-2) to (a-11)]

Polyols (a-2) to (a-11) were obtained in the same manner as in Production Example 1, except for using the parts given in Table 1 and Table 2 in the first step and the second step in Production Example 1.
In Production Example 3, 339 parts of PO and 50 parts of EO were dropped simultaneously instead of dropping PO in the first step of Production Example 1. In Production Examples 6 and 8 to 11, pentaerythritol was used instead of glycerol in the first step of Production Example 1. In Production Example 7, only the second step was performed without performing the first step, and pentaerythritol was used as it was as a polyol intermediate.
For (a-2) to (a-11), measurement was performed in the same manner as in Production Example 1, and the results are shown in Table 1 and Table 2.

[Table 1]

| | | | Production Example | | | | | |
|---|---|---|---|---|---|---|---|---|
| | | | 1 | 2 | 3 | 4 | 5 | 6 |
| Polyol | | | a-1 | a-2 | a-3 | a-4 | a-5 | a-6 |
| First step (part) | | Glycerol | 31 | 31 | 31 | 31 | 20 | – |
| | | Pentaerythritol | – | – | – | – | – | 23 |
| | | Potassium hydroxide | 2.1 | 2.1 | 2.1 | 2.1 | 1.4 | 1.1 |
| | | PO | 687 | 737 | 339 | 139 | 675 | 493 |
| | | EO | – | – | 50 | – | – | – |
| | | Synthetic silicate | 29 | 31 | 15 | 7 | 28 | 21 |
| | | Water | 14 | 15 | 7 | 3 | 14 | 10 |
| Second step (part) | | Polyol intermediate | (S-1) | (S-2) | (S-3) | (S-4) | (S-5) | (S-6) |
| | | | 718 | 768 | 370 | 170 | 695 | 516 |
| | | Tris (pentafluorophenyl) borane | 0.10 | 0.10 | 0.10 | 0.08 | 0.09 | 0.08 |
| | | PO | 232 | 232 | 580 | 580 | 155 | 309 |
| | | Potassium hydroxide | 0.67 | 0.67 | 0.67 | 0.67 | 0.44 | 0.33 |
| | | EO | 50 | 0 | 0 | 250 | 150 | 175 |
| | | Synthetic silicate | 40 | 40 | 40 | 40 | 40 | 40 |
| | | Water | 20 | 20 | 20 | 20 | 20 | 20 |
| Yield [%] | | | 95 | 94 | 95 | 96 | 97 | 98 |
| Mn | | | 3,000 | 3,000 | 3,000 | 3,000 | 4,500 | 6,000 |
| Terminal primarization ratio [mol%] | | | 82 | 88 | 88 | 89 | 88 | 90 |
| Average number of moles of ethylene oxide added per active hydrogen atom [mol] | | | 1.1 | 0 | 1.1 | 5.7 | 5.1 | 6.0 |
| Hydroxyl value | | | 56 | 56 | 56 | 56 | 37 | 37 |

[Table 2]

| | | | Production Example | | | | |
|---|---|---|---|---|---|---|---|
| | | | 7 | 8 | 9 | 10 | 11 |
| Polyol | | | a-7 | a-8 | a-9 | a-10 | a-11 |
| First step (part) | | Glycerol | – | – | – | – | – |
| | | Pentaerythritol | 17 | 25 | 28 | 20 | 23 |
| | | Potassium hydroxide | – | 1.7 | 1.3 | 1.4 | 1.1 |
| | | PO | – | 666 | 493 | 705 | 568 |
| | | EO | – | – | – | – | – |
| | | Synthetic silicate | – | 28 | 21 | 29 | 24 |
| | | Water | – | 14 | 10 | 15 | 12 |
| Second step (part) | | Polyol intermediate | (S-7) | (S-8) | (S-9) | (S-10) | (S-11) |
| | | | 17 | 25 | 28 | 20 | 23 |
| | | Tris (pentafluorophenyl) borane | 0.002 | 0.088 | 0.090 | 0.088 | 0.090 |
| | | PO | 733 | 189 | 379 | 155 | 309 |
| | | Potassium hydroxide | 0.25 | 0.54 | 0.41 | 0.44 | 0.33 |
| | | EO | 250 | 120 | 100 | 120 | 100 |
| | | Synthetic silicate | 40 | 13 | 20 | 12 | 17 |
| | | Water | 20 | 7 | 10 | 6 | 9 |
| Yield [%] | | | 96 | 97 | 98 | 97 | 96 |
| Mn | | | 8,000 | 3,675 | 4,900 | 4,500 | 6,000 |
| Terminal primarization ratio [mol%] | | | 89 | 88 | 86 | 89 | 88 |
| Average number of moles of ethylene oxide added per active hydrogen atom [mol] | | | 11.4 | 3.3 | 2.8 | 4.1 | 3.4 |
| Hydroxyl value | | | 28 | 46 | 46 | 37 | 37 |

Example 1 [Production of polymer polyol (A-1)]

A four-neck flask equipped with a temperature controller, vacuum stirring blades, a dropping pump, a pressure reducing device, a Dimroth condenser, a nitrogen inlet, and a nitrogen outlet was charged with 59.0 parts of polyol (a-1), 236 parts of polyol (PL1-1), 57.4 parts of dispersing agent (B-1), and 124 parts of xylene, followed by replacement with nitrogen, and then the temperature was raised to 130°C under stirring in a nitrogen atmosphere (until the completion of polymerization). Subsequently, a monomer-containing mixed liquid (Z1) prepared by mixing 28.4 parts of polyol (a-1), 114 parts polyol (PL1-1), 17.5 parts of dispersing agent (B-1), 105 parts of ACN, 245 parts of styrene, 0.35 parts of divinylbenzene, 3.5 parts of radical polymerization initiator (K-1), and 10.5 parts of xylene was dropped continuously at a rate of 25 parts/min using the dropping pump, and after the completion of the dropping, polymerization was performed at 130°C for 30 minutes. Moreover, as a result of cooling to 25°C, polymer polyol (A-1) was obtained. The volume average particle diameter and the polymer fine particle content (% by weight) of (A-1) were measured and shown in Table 3.

Examples 2 to 4 [Production of polymer polyols (A-2) to (A-4)]

Polymer polyols (A-2) to (A-4) were obtained in the same manner as in Example 1, except for using the initial charges and the monomer-containing mixed liquids of the parts given in Table 3, in Example 1. The volume average particle diameter and the polymer fine particle content (% by weight) of (A-2) to (A-4) were measured and shown in Table 3.

[Table 3]

| | | | Example | | | |
|---|---|---|---|---|---|---|
| | | | 1 | 2 | 3 | 4 |
| | Polymer polyol | | A-1 | A-2 | A-3 | A-4 |
| Initial charge (part) | | a-1 | 59.0 | 59.0 | 295 | 0 |
| | | a-2 | 0 | 0 | 0 | 236 |
| | | PL1-1 | 236 | 196 | 0 | 0 |
| | | PL1-4 | 0 | 40.3 | 40.3 | 40.3 |
| | | PL1-5 | 0 | 0 | 0 | 59.0 |
| | | B-1 | 57.4 | 57.4 | 57.4 | 57.4 |
| | | Xylene | 124 | 124 | 124 | 124 |
| Monomer-containing mixed liquid (part) | | a-1 | 28.4 | 28.4 | 102 | 0 |
| | | a-2 | 0 | 0 | 0 | 81.5 |
| | | PL1-1 | 114 | 114 | 0 | 0 |
| | | PL1-5 | 0 | 0 | 0 | 20.4 |
| | | B-1 | 17.5 | 17.5 | 17.5 | 17.5 |
| | | ACN | 105 | 105 | 105 | 105 |
| | | Styrene | 245 | 245 | 245 | 245 |
| | | Divinylbenzene | 0.35 | 0.35 | 0.35 | 0.35 |
| | | K-1 | 3.5 | 3.5 | 3.5 | 3.5 |
| | | Xylene | 10.5 | 10.5 | 10.5 | 10.5 |
| Volume average particle diameter (μm) | | | 0.28 | 0.20 | 0.16 | 1.16 |
| Polymer fine particle content (% by weight) | | | 35% | 35% | 35% | 35% |

Example 5 [Production of polymer polyol (A-5)]

[First step]

Two continuous polymerization apparatuses (2-L SUS pressure-resistant reactors to which a liquid feed line and an overflow line are connected) were prepared and arranged in series with the overflow line of the first reactor connected to the inlet of the second polymerization vessel. To each of the first polymerization vessel and the second polymerization vessel, 2000 parts of an initial charge liquid in which polyol (a-1), polyol (PL1-1) and xylene had been mixed in a ratio of 186 parts to 744 parts to 70.0 parts was fed and the temperature was raised to 130°C. A raw material mixed liquid in which 70.8 parts of (a-1), 283 parts of (PL1-1), 35.8 parts of (B-1), 40.3 parts of ACN, 93.9 parts of styrene, 1.34 parts of divinylbenzene, 1.34 parts of radical polymerization initiator (K-1), and 56.8 parts of xylene had been mixed was line-blended by using a static mixer and then fed into the first polymerization vessel continuously at a liquid feeding rate of 129.6 parts/min to overflow from the polymerization vessel, so that a polymer polyol obtained in a first step was obtained. The polymer polyol obtained in the first step which was overflown from the first polymerization vessel was fed to the second polymerization vessel continuously at a liquid feeding rate of 129.6 parts/min.

[Second step]

The polymer polyol obtained in the first step which was overflown from the first reactor at a liquid feeding rate of 129.6 parts/min and a raw material mixed liquid in which 7.29 parts of (a-1), 29.2 parts of (PL1-1), 93.9 parts of ACN, 219 parts of styrene, 3.13 parts of (K-1), and 9.39 parts of xylene had been mixed were line-blended by using a static mixer and then fed into the second polymerization vessel continuously at a liquid feeding rate of 210.0 parts/min. Then, a reaction liquid overflown from the polymerization vessel was stocked in an SUS receiving vessel, so that a polymer polyol containing unreacted monomers and xylene was obtained. From the polymer polyol containing unreacted monomers and xylene, the unreacted monomers and xylene were distilled off at 130 to 140°C under a reduced pressure of 2, 666 to 3,999 Pa (20 to 30 torr) for 2 hours with addition of excessive water vapor (charged over 2 hours in such an amount that the amount of water contained in the vapor became 4% by weight relative to the polymer polyol) through another port, so that a polymer polyol (A-5) was obtained. (A-5) was evaluated by the above-mentioned measurement and evaluation methods. The results are shown in Table 6 below.

Examples 6 to 17 [Production of polymer polyols (A-6) to (A-17)]

Polymer polyols (A-6) to (A-17) were obtained in the same manner as in Example 5, except for using, in the first step and the second step, the initial charges and the raw material mixed liquids of the parts given in Tables 4 and 5, in Example 5. (A-6) to (A-17) were measured and evaluated in the same manner as in Example 5. The results are shown in Tables 6 to 8.

Comparative Example 1 [Production of polymer polyol (R-1)]

A continuous polymerization apparatus (a 2-L SUS pressure-resistant reactor to which a liquid feed line and an overflow line are connected) was prepared and was charged with 2000 parts of an initial charge liquid in which polyol (a-1), polyol (PL1-1) and xylene had been mixed in a ratio of 186 parts to 744 parts to 70 parts, and the temperature was raised to 130°C. A raw material mixed liquid in which 78.1 parts of (a-1), 312 parts of (PL1-1), 35.8 parts of (B-1), 134 parts of ACN, 313 parts of styrene, 1.34 parts of divinylbenzene, 4.47 parts of radical polymerization initiator (K-1), and 66.2 parts of xylene had been mixed was line-blended by using a static mixer and then fed into the polymerization vessel continuously at a liquid feeding rate of 210.0 parts/min to overflow from the polymerization vessel, so that a polymer polyol containing unreacted monomers and xylene was obtained. From the polymer polyol containing unreacted monomers and xylene, the unreacted monomers and xylene were distilled off at 130 to 140°C under a reduced pressure of 2, 666 to 3, 999 Pa (20 to 30 torr) for 2 hours with addition of excessive water vapor (charged over 2 hours in such an amount that the amount of water contained in the vapor became 4% by weight relative to the polymer polyol) through another port, so that a polymer polyol (R-1) was obtained. (R-1) was measured and evaluated in the same manner as in Example 5. The results are shown in Table 8.

Comparative Examples 2 to 3 [Production of polymer polyols (R-2) to (R-3)]

Polymer polyols (R-2) to (R-3) were obtained in the same manner as in Comparative Example 1, except for using the initial charges and the raw material mixed liquids of the parts given in Table 5, in Comparative Example 1. (R-2) to (R-3) were measured and evaluated in the same manner as in Example 5. The results are shown in Table 8.

Comparative Example 4 [Production of polymer polyol (R-4)]

Polymer polyol (R-4) was obtained in the same manner as in Example 12, except for using polyol (PL1-2) instead of polyol (a-5) in Example 12. (R-4) was measured and evaluated in the same manner as in Example 5. The results are shown in Table 8.

[Table 4]

| | | Example | | | | | | | |
|---|---|---|---|---|---|---|---|---|---|
| | | 5 | 6 | 7 | 8 | 9 | 10 | 11 | 12 |
| Initial charge liquid (part) | a-1 | 186 | 186 | 186 | 0 | 0 | 0 | 930 | 0 |
| | a-2 | 0 | 0 | 0 | 930 | 0 | 0 | 0 | 0 |
| | a-3 | 0 | 0 | 0 | 0 | 186 | 0 | 0 | 0 |
| | a-4 | 0 | 0 | 0 | 0 | 0 | 186 | 0 | 0 |
| | a-5 | 0 | 0 | 0 | 0 | 0 | 0 | 0 | 1000 |
| | PL1-1 | 744 | 744 | 744 | 0 | 744 | 744 | 0 | 0 |
| | Xylene | 70.0 | 70.0 | 70.0 | 70.0 | 70.0 | 70.0 | 70.0 | 0 |
| Raw material mixed liquid of first step (part) | Polymer polyol | Not used | A-1 | A-2 | Not used | Not used | Not used | A-3 | Not used |
| | | | 128 | 128 | | | | 128 | |
| | a-1 | 70.8 | 37.1 | 35.4 | 0 | 0 | 0 | 177 | 0 |
| | a-2 | 0 | 0 | 0 | 354 | 0 | 0 | 0 | 0 |
| | a-3 | 0 | 0 | 0 | 0 | 70.8 | 0 | 0 | 0 |
| | a-4 | 0 | 0 | 0 | 0 | 0 | 65.9 | 0 | 0 |
| | a-5 | 0 | 0 | 0 | 0 | 0 | 0 | 0 | 334 |
| | PL1-1 | 283 | 148 | 142 | 0 | 283 | 264 | 0 | 0 |
| | PL1-4 | 0 | 0 | 8.46 | 0 | 0 | 0 | 8 | 0 |
| | B-1 | 35.8 | 26.2 | 26.2 | 35.8 | 35.8 | 35.8 | 26.2 | 0 |
| | B-2 | 0 | 0 | 0 | 0 | 0 | 0 | 0 | 44.7 |
| | ACN | 40.3 | 36.2 | 36.2 | 40.3 | 40.3 | 40.3 | 36.2 | 125 |
| | Styrene | 93.9 | 84.6 | 84.6 | 93.9 | 93.9 | 93.9 | 84.6 | 53.7 |
| | Divinylbenzene | 1.34 | 1.30 | 1.30 | 1.34 | 1.34 | 1.34 | 1.30 | 0 |
| | K-1 | 1.34 | 1.21 | 1.21 | 1.34 | 1.34 | 1.34 | 1.21 | 1.79 |
| | Xylene | 56.8 | 40.6 | 40.6 | 56.8 | 56.8 | 56.8 | 40.6 | 0 |
| Raw material mixed liquid of second step (part) | a-1 | 7.29 | 29.9 | 28.8 | 0.0 | 0 | 0 | 149 | 0 |
| | a-2 | 0 | 0 | 0 | 36.4 | 0 | 0 | 0 | 0 |
| | a-3 | 0 | 0 | 0 | 0 | 7.29 | 0 | 0 | 0 |
| | a-4 | 0 | 0 | 0 | 0 | 0 | 12.2 | 0 | 0 |
| | a-5 | 0 | 0 | 0 | 0 | 0 | 0 | 0 | 192 |
| | PL1-1 | 29.2 | 119 | 120 | 0 | 29.2 | 48.6 | 0 | 0 |
| | B-2 | 0 | 0 | 0 | 0 | 0 | 0 | 0 | 67 |
| | ACN | 93.9 | 84.6 | 84.6 | 93.9 | 93.9 | 93.9 | 84.6 | 188 |
| | Styrene | 219 | 197 | 197 | 219 | 219 | 219 | 197 | 80.5 |
| | K-1 | 3.13 | 2.82 | 2.82 | 3.13 | 3.13 | 3.13 | 2.82 | 2.68 |
| | Xylene | 9.39 | 8.46 | 8.46 | 9.39 | 9.39 | 9.39 | 8.46 | 0 |
| Liquid feeding rate | First vessel (part/min) | 129.6 | 111.8 | 111.8 | 129.6 | 129.6 | 124.2 | 111.8 | 107.8 |
| | Second vessel (part/min) | 210.0 | 210.0 | 210.0 | 210.0 | 210.0 | 210.0 | 210.0 | 210.0 |

[Table 5]

| | | | Example | | | | | Comparative Example | | |
|---|---|---|---|---|---|---|---|---|---|---|
| | | | 13 | 14 | 15 | 16 | 17 | 1 | 2 | 3 |
| Initial charge liquid (part) | | a-1 | 0 | 0 | 0 | 0 | 0 | 186 | 0 | 0 |
| | | a-2 | 0 | 0 | 744 | 0 | 0 | 0 | 186 | 0 |
| | | a-3 | 0 | 0 | 0 | 0 | 0 | 0 | 0 | 186 |
| | | a-6 | 200 | 0 | 0 | 0 | 0 | 0 | 0 | 0 |
| | | a-7 | 0 | 1000 | 0 | 0 | 0 | 0 | 0 | 0 |
| | | a-8 | 0 | 0 | 0 | 500 | 0 | 0 | 0 | 0 |
| | | a-9 | 0 | 0 | 0 | 500 | 0 | 0 | 0 | 0 |
| | | a-10 | 0 | 0 | 0 | 0 | 500 | 0 | 0 | 0 |
| | | a-11 | 0 | 0 | 0 | 0 | 500 | 0 | 0 | 0 |
| | | PL1-1 | 0 | 0 | 0 | 0 | 0 | 744 | 744 | 744 |
| | | PL1-3 | 800 | 0 | 0 | 0 | 0 | 0 | 0 | 0 |
| | | PL1-5 | 0 | 0 | 186 | 0 | 0 | 0 | 0 | 0 |
| | | Xylene | 0 | 0 | 70 | 0 | 0 | 70 | 70 | 70 |
| Raw material mixed liquid of first step (part) | | Polymer polyol | Not used | Not used | A-4 128 | Not used | Not used | Not used | Not used | Not used |
| | | a-1 | 0 | 0 | 0 | 0 | 0 | 78.1 | 0 | 0 |
| | | a-2 | 0 | 0 | 142 | 0 | 0 | 0 | 78.1 | 0 |
| | | a-3 | 0 | 0 | 0 | 0 | 0 | 0 | 0 | 78.1 |
| | | a-6 | 66.7 | 0 | 0 | 0 | 0 | 0 | 0 | 0 |
| | | a-7 | 0 | 334 | 0 | 0 | 0 | 0 | 0 | 0 |
| | | a-8 | 0 | 0 | 0 | 167 | 0 | 0 | 0 | 0 |
| | | a-9 | 0 | 0 | 0 | 167 | 0 | 0 | 0 | 0 |
| | | a-10 | 0 | 0 | 0 | 0 | 167 | 0 | 0 | 0 |
| | | a-11 | 0 | 0 | 0 | 0 | 167 | 0 | 0 | 0 |
| | | PL1-1 | 0 | 0 | 0 | 0 | 0 | 312 | 312 | 312 |
| | | PL1-3 | 267 | 0 | 0 | 0 | 0 | 0 | 0 | 0 |
| | | PL1-5 | 0 | 0 | 35.4 | 0 | 0 | 0 | 0 | 0 |
| | | B-1 | 0 | 0 | 26.2 | 0 | 0 | 35.8 | 35.8 | 35.8 |
| | | B-2 | 44.7 | 44.7 | 0 | 44.7 | 44.7 | 0 | 0 | 0 |
| | | ACN | 125 | 125 | 36.2 | 125 | 125 | 134 | 134 | 134 |
| | | Styrene | 53.7 | 53.7 | 84.6 | 53.7 | 53.7 | 313 | 313 | 313 |
| | | Divinylbenzene | 0 | 0 | 1.30 | 0 | 0 | 1.34 | 1.34 | 1.34 |
| | | K-1 | 1.79 | 1.79 | 1.21 | 1.79 | 1.79 | 4.47 | 4.47 | 4.47 |
| | | Xylene | 0 | 0 | 40.6 | 0 | 0 | 66.2 | 66.2 | 66.2 |
| Raw material mixed liquid of second step (part) | | A-2 | 0 | 0 | 119 | 0 | 0 | | | |
| | | a-6 | 38.4 | 0 | 0 | 0 | 0 | | | |
| | | a-7 | 0 | 192 | 0 | 0 | 0 | | | |
| | | a-8 | 0 | 0 | 0 | 96.0 | 0 | | | |
| | | a-9 | 0 | 0 | 0 | 96.0 | 0 | | | |
| | | a-10 | 0 | 0 | 0 | 0 | 96.0 | | | |
| | | a-11 | 0 | 0 | 0 | 0 | 96.0 | | | |
| | | PL1-3 | 154 | 0 | 0 | 0 | 0 | | | |
| | | PL1-5 | 0 | 0 | 29.9 | 0 | 0 | | | |
| | | B-2 | 67.1 | 67.1 | 0 | 67.1 | 67.1 | | | |
| | | ACN | 188 | 188 | 84.6 | 188 | 188 | | | |
| | | Styrene | 80.5 | 80.5 | 197 | 80.5 | 80.5 | | | |
| | | K-1 | 2.68 | 2.68 | 2.82 | 2.68 | 2.68 | | | |
| | | Xylene | 0 | 0 | 8 | 0 | 0 | | | |
| Liquid feeding rate | | First vessel (part/min) | 107.8 | 107.8 | 111.8 | 107.8 | 107.8 | 210.0 | 210.0 | 210.0 |
| | | Second vessel (part/min) | 210.0 | 210.0 | 210.0 | 210.0 | 210.0 | - | - | - |

[Table 6]

| | Example | | | | | |
|---|---|---|---|---|---|---|
| | 5 | 6 | 7 | 8 | 9 | 10 |
| Polymer polyol | A-5 | A-6 | A-7 | A-8 | A-9 | A-10 |
| Volume average particle diameter (R) of polymer polyol | 1.2 | 0.9 | 0.6 | 1.1 | 1.0 | 1.2 |
| Total content of (a-1) to (a-11) in polyol (PL) | 20 | 20 | 19 | 100 | 20 | 20 |
| Average number (x) of moles of ethylene oxide added of (a-1) to (a-11) | 1.1 | 1.1 | 1.1 | 0 | 1.1 | 1.1 |
| Primary hydroxidation ratio (y) (%) of terminal hydroxyl groups of (a-1) to (a-11) | 82 | 82 | 82 | 88 | 88 | 89 |
| Formula (1) | | | | | | |
| Formula (2) | Satisfied | Satisfied | Satisfied | Satisfied | Satisfied | Satisfied |
| St (% by weight) (relative to total weight of (E)) | 30 | 30 | 30 | 30 | 30 | 30 |
| ACN (% by weight) (relative to total weight of (E)) | 70 | 70 | 70 | 70 | 70 | 70 |
| Polymer fine particle content (% by weight) (relative to polymer polyol) | 50 | 50 | 50 | 50 | 50 | 50 |
| Viscosity (mPa·s) | 7,800 | 7,750 | 7,900 | 7,800 | 7,750 | 7,600 |
| Arithmetic standard deviation of polymer particles on the volume basis | 0.60 | 0.58 | 0.55 | 0.58 | 0.59 | 0.60 |
| Coarse particle content (% by weight) | 0.0008 | 0.0005 | 0.0003 | 0.0009 | 0.0002 | 0.0004 |
| Total degree of unsaturation t of polyol (PL) | 0.04 | 0.04 | 0.04 | 0.02 | 0.04 | 0.04 |
| Hydroxyl group equivalent S of polyol (PL) | 1000 | 1000 | 980 | 1000 | 810 | 1000 |
| Formula (3) | Not satisfied | Not satisfied | Not satisfied | Satisfied | Not satisfied | Not satisfied |
| Soluble polymer content (% by weight, relative to polymer polyol) | 2.4 | 3.4 | 1.4 | 1.8 | 1.5 | 2.4 |
| Soluble polymer content/polymer content | 0.05 | 0.07 | 0.03 | 0.04 | 0.03 | 0.05 |
| Formula (4) | Satisfied | Satisfied | Satisfied | Satisfied | Satisfied | Satisfied |
| Formula (5) | Satisfied | Satisfied | Satisfied | Satisfied | Satisfied | Satisfied |
| Filterability (g/s·cm$^2$) | 0.12 | 0.14 | 0.16 | 0.12 | 0.11 | 0.11 |
| Polyurethane foam evaluation | Example 18 | Example 19 | Example 20 | Examples 21, 25 | Example 22 | Example 23 |

EP 2 290 002 B1

[Table 7]

| | Example | | | | | |
|---|---|---|---|---|---|---|
| | 11 | 12 | 13 | 14 | 15 | 16 |
| Polymer polyol | A-11 | A-12 | A-13 | A-14 | A-15 | A-16 |
| Volume average particle diameter (R) of polymer polyol | 0.5 | 0.4 | 0.4 | 0.4 | 0.5 | 0.4 |
| Total content of (a-1) to (a-11) in polyol (PL) | 97 | 100 | 20 | 100 | 96 | 100 |
| Average number (x) of moles of ethylene oxide added of (a-1) to (a-11) | 1.1 | 5.1 | 6.0 | 11.4 | 0 | 3.0 |
| Primary hydroxidation ratio (y) (%) of terminal hydroxyl groups of (a-1) to (a-11) | 82 | 88 | 90 | 89 | 88 | 87 |
| Formula (1) | | | | Satisfied | | |
| Formula (2) | Satisfied | Satisfied | Satisfied | | Satisfied | Satisfied |
| St (% by weight) (relative to total weight of (E)) | 30 | 70 | 70 | 70 | 30 | 70 |
| ACN (% by weight) (relative to total weight of (E)) | 70 | 30 | 30 | 30 | 70 | 30 |
| Polymer fine particle content (% by weight) (relative to polymer polyol) | 50 | 40 | 40 | 40 | 50 | 40 |
| Viscosity (mPa·s) | 7,600 | 7,600 | 8,200 | 9,200 | 7,600 | 9,300 |
| Arithmetic standard deviation of polymer particles on the volume basis | 0.55 | 0.45 | 0.42 | 0.45 | 0.55 | 0.45 |
| Coarse particle content (% by weight) | 0.0003 | 0.0003 | 0.0002 | 0.0005 | 0.0002 | 0.0002 |
| Total degree of unsaturation t of polyol (PL) | 0.02 | 0.02 | 0.04 | 0.02 | 0.02 | 0.02 |
| Hydroxyl group equivalent S of polyol (PL) | 970 | 1500 | 1000 | 2000 | 980 | 1200 |
| Formula (3) | Satisfied | Satisfied | Not satisfied | Satisfied | Satisfied | Satisfied |
| Soluble polymer content (% by weight, relative to polymer polyol) | 1.2 | 2.0 | 2.8 | 4.0 | 1.2 | 3.5 |
| Soluble polymer content/polymer content | 0.02 | 0.05 | 0.07 | 0.10 | 0.02 | 0.09 |
| Formula (4) | Satisfied | Satisfied | Satisfied | Satisfied | Satisfied | Satisfied |
| Formula (5) | Satisfied | Satisfied | Satisfied | Satisfied | Satisfied | Satisfied |
| Filterability (g/s·cm$^2$) | 0.18 | 0.18 | 0.16 | 0.16 | 0.17 | 0.16 |
| Polyurethane foam evaluation | Examples 24, 26 | Example 28 | Example 29 | Example 30 | Example 27 | Example 31 |

24

[Table 8]

|  | Example | Comparative Example | | | |
|---|---|---|---|---|---|
|  | 17 | 1 | 2 | 3 | 4 |
| Polymer polyol | A-17 | R-1 | R-2 | R-3 | R-4 |
| Volume average particle diameter (R) of polymer polyol | 0.4 | 2.2 | 2.4 | 2.3 | 0.4 |
| Total content of (a-1) to (a-11) in polyol (PL) | 100 | 20 | 20 | 20 |  |
| Average number (x) of moles of ethylene oxide added of (a-1) to (a-11) | 3.8 | 1.1 | 0 | 1.1 |  |
| Primary hydroxidation ratio (y) (%) of terminal hydroxyl groups of (a-1) to (a-11) | 89 | 82 | 88 | 38 |  |
| Formula (1) |  |  |  |  |  |
| Formula (2) | Satisfied | Satisfied | Satisfied | Satisfied |  |
| St (% by weight) (relative to total weight of (E)) | 70 | 30 | 30 | 30 | 70 |
| ACN (% by weight) (relative to total weight of (E)) | 30 | 70 | 70 | 70 | 30 |
| Polymer fine particle content (% by weight) (relative to polymer polyol) | 40 | 50 | 50 | 50 | 40 |
| Viscosity (mPa·s) | 9,100 | 9,200 | 9,100 | 9,800 | 10,500 |
| Arithmetic standard deviation of polymer particles on the volume basis | 0.45 | 1.20 | 1.80 | 2.00 | 1.60 |
| Coarse particle content (% by weight) | 0.0002 | 0.0150 | 0.0120 | 0.0085 | 0.0032 |
| Total degree of unsaturation t of polyol (PL) | 0.02 | 0.04 | 0.04 | 0.04 | 0.07 |
| Hydroxyl group equivalent S of polyol (PL) | 1500 | 1000 | 1000 | 1000 | 1800 |
| Formula (3) | Satisfied | Not satisfied | Not satisfied | Not satisfied | Not satisfied |
| Soluble polymer content (% by weight, relative to polymer polyol) | 3.8 | 5.3 | 7.0 | 6.2 | 6.4 |
| Soluble polymer content/ polymer content | 0.10 | 0.11 | 0.14 | 0.12 | 0.16 |
| Formula (4) | Satisfied | Satisfied | Satisfied | Satisfied | Satisfied |
| Formula (5) | Satisfied | Satisfied | Satisfied | Satisfied | Not satisfied |
| Filterability (g/s·cm$^2$) | 0.16 | Not filterable | Not filterable | Not filterable | 0.08 |
| Polyurethane foam evaluation | Example 32 | Comparative Example 5 | Comparative Example 6 | Comparative Example 7 | Comparative Example 8 |

EP 2 290 002 B1

Examples 18 to 27 and Comparative Examples 5 to 7 [Production of polyurethane foam]

Using polymer polyols (A-5) to (A-11) obtained in Examples 5 to 11 and 15, and comparative polymer polyols (R-1) to (R-3) obtained in Comparative Examples 1 to 3, polyurethane foams were produced by the foaming procedures mentioned below using the compounding ratios provided in Table 9. Physical properties of these foams were evaluated by the following methods. The results are shown in Table 9.

<Foaming procedures>

[1] The temperature of each of a polymer polyol, a polyol, and a polyisocyanate was adjusted to 25 ± 2°C.
[2] The polymer polyol, the polyol, a foam stabilizer, water and a catalyst were charged in this order into a stainless steel beaker with a capacity of 1 L, and stirred and mixed at 25 ± 2°C, followed by immediate addition of the polyisocyanate and stirring by using a stirring machine [HOMO DISPER, manufactured by Tokushu Kika Kogyo Co., Ltd.] (stirring conditions: 2,000 rpm, for 8 seconds).
[3] After stopping stirring, the mixed contents of the beaker were charged into a wooden box of 25 × 25 × 10 cm (25 ± 2°C) to be foamed, so that a polyurethane foam was obtained.

[Table 9]

| | | | Example | | | | | | | | | | Comparative Example | | |
|---|---|---|---|---|---|---|---|---|---|---|---|---|---|---|---|
| | | | 18 | 19 | 20 | 21 | 22 | 23 | 24 | 25 | 26 | 27 | 5 | 6 | 7 |
| Compounding ratio (parts) | | Polymer polyol | A-5 55 | A-6 55 | A-7 55 | A-8 55 | A-9 55 | A-10 55 | A-11 55 | A-8 55 | A-11 55 | A-15 55 | R-1 55 | R-2 55 | R-3 55 |
| | Polyol | (a-1) | 45 | 45 | 45 | 45 | | | 45 | 45 | 45 | | 45 | | |
| | | (a-2) | | | | | 45 | | | | | 36 | | 45 | |
| | | (a-3) | | | | | | 45 | | | | | | | 45 |
| | | (a-4) | | | | | | | | | | | | | |
| | | (a-5) | | | | | | | | | | | | | |
| | | (a-6) | | | | | | | | | | | | | |
| | | (a-7) | | | | | | | | | | | | | |
| | PL1-5 | | | | | | | | | | | 9 | | | |
| | Water | | 2.8 | 2.8 | 2.8 | 2.8 | 2.8 | 2.8 | 2.8 | 2.8 | 2.8 | 2.8 | 2.8 | 2.8 | 2.8 |
| | Catalyst A | | 0.06 | 0.06 | 0.06 | 0.06 | 0.06 | 0.06 | 0.06 | 0.06 | 0.06 | 0.06 | 0.06 | 0.06 | 0.06 |
| | Catalyst B | | 0.18 | 0.18 | 0.18 | 0.18 | 0.18 | 0.18 | 0.18 | 0.01 | 0.01 | 0.18 | 0.18 | 0.18 | 0.18 |
| | SRX-280A | | 0.5 | 0.5 | 0.5 | 0.5 | 0.5 | 0.5 | 0.5 | 0.5 | 0.5 | 0.5 | 0.5 | 0.5 | 0.5 |
| | TDI-80 | | 34.9 | 34.9 | 35.1 | 34.9 | 34.9 | 34.9 | 35.1 | 34.9 | 34.9 | 35.1 | 34.9 | 34.9 | 34.9 |
| <Physical properties of foam> Density [kg/m$^3$] | | | 34.8 | 34.9 | 34.6 | 35.0 | 34.8 | 35.1 | 34.8 | 35.8 | 35.5 | 34.6 | 34.8 | 34.9 | 34.6 |
| 25% ILD [kgf/314 cm$^2$] | | | 33.5 | 34.3 | 35.4 | 36.3 | 31.5 | 31.0 | 38.5 | 33.5 | 34.3 | 38.6 | 28.5 | 26.5 | 26.4 |
| Tensile strength [kgf/cm$^2$] | | | 1.68 | 1.65 | 1.63 | 1.61 | 1.72 | 1.75 | 1.60 | 1.68 | 1.65 | 1.65 | 1.62 | 1.60 | 1.62 |
| Tear strength [kgf/cm] | | | 0.83 | 0.82 | 0.81 | 0.80 | 0.85 | 0.86 | 0.79 | 0.83 | 0.82 | 0.79 | 0.80 | 0.79 | 0.80 |
| Degree of cutting elongation [%] | | | 105 | 98 | 100 | 98 | 102 | 117 | 96 | 105 | 102 | 95 | 85 | 92 | 88 |
| Permanent compression set [%] | | | 2.8 | 2.9 | 3.1 | 3.2 | 3.0 | 3.0 | 3.2 | 2.2 | 2.1 | 2.9 | 4.2 | 4.1 | 4.2 |
| Gas permeability [ml/cm$^2$/s] | | | 95.0 | 98.6 | 114.2 | 102.3 | 98.7 | 96.2 | 120.4 | 98.5 | 108.5 | 109.9 | 50.0 | 48.0 | 62.0 |

<Methods for evaluating physical properties of foams listed in Table 9>

(1) Density (kg/m$^3$): In accordance with JIS K6400-1997 [Item 5]
(2) 25% ILD (hardness) (kgf/314 cm$^2$): In accordance with JIS K6382-1995 [Item 5.3]
(3) Tensile strength (kgf/cm$^2$): In accordance with JIS K6301-1995 [Item 3]
(4) Tear strength (kgf/cm): In accordance with JIS K6301-1995 [Item 9]
(5) Degree of cutting elongation (%): In accordance with JIS K6301-1995 [Item 3]
(6) Permanent compression set (%) : In accordance with JIS K6382-1995 [Item 5.5]
(7) Gas permeability (ml/cm$^2$/s) : In accordance with JIS K6400-7-2004 [Item 4]

Examples 28 to 32 and Comparative Example 8 [Production of polyurethane foam]

Using polymer polyols (A-12) to (A-14) and (A-16) to (A-17) obtained in Examples 12 to 14 and 16 to 17 and polymer polyol (R-4) obtained in Comparative Example 4, respective raw materials were stirred and mixed at 25 $\pm$ 2°C using the foaming formulations provided in Table 10, and then polyurethane foams were produced at a mold temperature of 60 $\pm$ 5°C, a mold size of 40 $\times$ 40 $\times$ 10 (H) cm, and a curing time of 6 minutes. The physical properties of these foams and the test results of flame retardancy (rate of combustion) are given in Table 10.

[Table 10]

| | | Example | | | | | Comparative Example |
|---|---|---|---|---|---|---|---|
| | | 28 | 29 | 30 | 31 | 32 | 8 |
| Compounding ratio (parts) | Polymer polyol | A-12 80 | A-13 80 | A-14 80 | A-16 80 | A-17 80 | R-4 80 |
| | Polyol (a-1) | | | | | | |
| | Polyol (a-2) | | | | | | |
| | Polyol (a-3) | | | | | | |
| | Polyol (a-4) | | | | | | |
| | Polyol (a-5) | 20 | | | | | 20 |
| | Polyol (a-6) | | 20 | | | | |
| | Polyol (a-7) | | | 20 | | | |
| | Polyol (a-8) | | | | 10 | | |
| | Polyol (a-9) | | | | 10 | | |
| | Polyol (a-10) | | | | | 10 | |
| | Polyol (a-11) | | | | | 10 | |
| | Water | 4 | 4 | 4 | 4 | 4 | 4 |
| | Catalyst C | 0.4 | 0.4 | 0.4 | 0.4 | 0.4 | 0.4 |
| | Catalyst D | 0.1 | 0.1 | 0.1 | 0.1 | 0.1 | 0.1 |
| | SZ-1311 | 0.5 | 0.5 | 0.5 | 0.5 | 0.5 | 0.5 |
| | L-5309 | 1 | 1 | 1 | 1 | 1 | 1 |
| | CE-729 | 45.9 | 45.9 | 45.2 | 46.4 | 45.9 | 44.1 |
| <Physical properties of Foam> Density [kg/m$^3$] | | 40 | 41 | 40 | 39 | 39 | 40 |
| 25% ILD [kgf/314 cm$^2$] | | 25.2 | 24.8 | 23.4 | 25.3 | 25.4 | 21 |
| Rate of combustion [cm/min] | | SE | SE | SE | SE | SE | 44 |

<Methods for evaluating physical properties of foams listed in Table 10>

(1) Density (kg/m$^3$): In accordance with JIS K6400-1997 [Item 5]
(2) 25% ILD (kg/314 cm$^2$): In accordance with JIS K6382-1995 [Item 5.3]

(3) Rate of combustion (cm/min) : Evaluation was performed in accordance with Federal Motor Vehicle Safety Standards (MVSS-302) . In the results, SE means to be self-extinguishable (even if fire is set on a specimen, the fire extinguishes itself without spreading the flame).

The results given in Tables 6 to 8 show that the polymer polyols of Examples 5 to 17 have extremely reduced amounts of coarse particles and are extremely superior in filterability in comparison to the polymer polyols of comparative examples.

On the other hand, the polymer polyols of Comparative Examples 1 to 3 contain polyols corresponding to polyol (a), but they fail to satisfy the volume average particle diameter of the present invention and they are large in volume average particle diameter. As a result, the content of coarse particles is extremely large and the filterability is very poor.

The polymer polyol of Comparative Example 4 satisfies the volume average particle diameter of the present invention, but it fails to contain a polyol corresponding to polyol (a). As a result, the content of coarse particles is large and the filterability is deteriorated in comparison to examples.

From the results of Table 9, the polyurethane foams produced using the polymer polyols of the present invention exhibit superior results with respect to all items of 25% ILD, tensile strength, tear strength, degree of cutting elongation, permanent compression set, and gas permeability in comparison to comparative examples in spite of their similar densities. In particular, excellent results are exhibited with respect to 25% ILD.

Moreover, from the results of Table 10, as to the polyurethane foams produced by using a mold, the polyurethane foams produced using the polymer polyols of the present invention exhibit superior results with respect to all items of 25% ILD and rate of combustion in comparison to comparative examples in spite of their similar densities. In particular, excellent results are exhibited with respect to 25% ILD.

Generally, as to physical properties of polyurethane foams, the fact that the values of 25% ILD, tensile strength, tear strength, degree of cutting elongation, and gas permeability are larger or the values of permanent compression set and rate of combustion are smaller means that the properties are better.

INDUSTRIAL APPLICABILITY

The polymer polyol (A) of the present invention can render the maintenance of a polyurethane production apparatus easy to improve the productivity of a polyurethane remarkably because clogging of small openings of a production apparatus to be used for the production of a polyurethane is reduced, and since it improves the mechanical physical properties of a polyurethane using the (A), it can be suitably used widely for general polyurethanes, including foams (soft, hard, and seminard foams),

elastomers, RIM molded articles, and the like. Particularly, the use for the procuction of a polyurethane foam is suitable because physical properties of a polyurethane foam can be adjusted with good balance.

Polyurethanes formed from the polyurethane forming composition of the present invention are to be used for a wide variety of applications, and particularly suitably used in the form of a polyurethane foam for automobile interior components, indoor furnishing gocds of furniture.

**Claims**

1. A polymer polyol (A) in which polymer fine particles (JR) having an ethylenically unsaturated compound (E) as a constituent unit are contained in a polyol (PL), wherein the (PL) comprises the following polyol (a), and the volume average particle diameter (R) of the (JR), as measured using a method specified in paragraph [0097] of the present specification, is from 0.1 to 1.5 $\mu$m;

   polyol (a): a polyether polyol resulting from random and/or block addition of an alkylene oxide mainly composed of a 1,2-alkylene oxide to an active hydrogen-containing compound, wherein the average number x of moles of ethylene oxide added per active hydrogen atom is 20 or less, the primary hydroxidation ratio y of terminal hydroxyl groups, as determined by a $^1$H-NMR method described in paragraphs [0018] and [0019] of the present specification, is 40% or more, and x and y (%) satisfy a relationship of the following formula (1) when x is from 10 to 20 and a relationship of the following formula (2) when x is less than 10;

$$y \geq 0.328x + 90.44 \qquad (1)$$

$$y \geq 42x^{0.47}(1 - x/41) \qquad (2)$$

2. The polymer polyol according to claim 1, wherein the content of the polyol (a) is from 20 to 100% by weight based on the weight of the polyol (PL).

3. The polymer polyol according to claim 1 or 2, wherein as to the total degree of unsaturation t and the hydroxyl group equivalent s of the polyol (PL), s is from 500 to 1,800 and a relationship of the following formula (3) is satisfied;

$$t \leq 3 \times 10^{-5} \times s - 0.0006 \qquad (3).$$

4. The polymer polyol according to any one of claims 1 to 3, wherein the arithmetic standard deviation on the volume basis of the particle size distribution of the polymer fine particles (JR) determined when the range of from 0.040 to 262 $\mu$m is divided into 65, as specified in paragraphs [0049]-[0050] of the present specification, is 0.6 or less.

5. The polymer polyol according to any one of claims 1 to 4, wherein the content of the polymer fine particles (JR), as determined by the method described in paragraph [0046] of the present specification, is from 30 to 75% by weight based on the weight of the polymer polyol (A).

6. The polymer polyol according to any one of claims 1 to 5, wherein the content of coarse particles, which are polymer fine particles having a particle diameter of 0.10 mm or more, is from 0 to 30 x $10^{-4}$% by weight based on the weight of the polymer polyol (A), as measured using the method specified in paragraph [0098] of the present specification.

7. The polymer polyol according to any one of claims 1 to 6, wherein the ratio between the soluble polymer content (% by weight) and the polymer fine particle content (% by weight) (soluble polymer content/polymer fine particle content) is 1/10 or less, as measured according to the methods described in paragraphs [0053]-[0055] of the present specification.

8. The polymer polyol according to any one of claims 1 to 7, wherein the content v (% by weight) of the polymer fine particles (JR) based on the weight of the polymer polyol and the viscosity w (mPa·s) of the polymer polyol satisfy the following formulae (4) and (5);

$$w \geq 250v - 5000 \qquad (4)$$

$$w \leq 450v - 8400 \qquad (5),$$

wherein the viscosity w of the polymer polyol is measured by the method described in JIS K1557-5: 2007 at 25°C by using a Brookfield-type viscometer.

9. A method for producing a polyurethane by making a polyol component and an isocyanate component react with each other, wherein a polyol component comprising from 10 to 100% by weight of the polymer polyol (A) according to any one of claims 1 to 8 is used.

**Patentansprüche**

1. Polymerpolyol (A), in dem Polymerfeinpartikel (JR) mit einer ethylenisch ungesättigten Verbindung (E) als konstitutionelle Einheit in einem Polyol (PL) enthalten sind, wobei das (PL) das folgende Polyol (a) umfasst, und der volumengemittelte Partikeldurchmesser (R) der (JR), welcher unter Anwendung eines in Absatz [0097] der vorliegenden Beschreibung beschriebenen Verfahrens bestimmt wird, 0,1 bis 1,5 $\mu$m beträgt;
Polyol (a): ein Polyetherpolyol entstanden aus Zufalls- und/oder Blockaddition eines Alkylenoxids, welches hauptsächlich aus einem 1,2-Alkylenoxid besteht, an eine aktiven Wasserstoff enthaltende Verbindung, wobei die durchschnittliche Anzahl x an Molen Ethylenoxid, die pro aktivem Wasserstoffatom addiert ist, 20 oder weniger beträgt, der primäre Hydroxylierungsanteil y der terminalen Hydroxylgruppen, welcher durch ein in den Absätzen [0018] und [0019] der vorliegenden Beschreibung beschriebenes $^1$H-NMR-Verfahren bestimmt wird, 40% oder mehr beträgt, und x und y (%) eine Beziehung der folgenden Formel (1) erfüllen, wenn x 10 bis 20 beträgt, und eine Beziehung der folgenden Formel (2) erfüllen, wenn x weniger als 10 beträgt;

$$y \geq 0{,}328x + 90{,}44 \qquad (1)$$

$$y \geq 42x^{0{,}47}(1 - x/41) \qquad (2)$$

**2.** Polymerpolyol gemäß Anspruch 1, wobei der Gehalt an dem Polyol (a) 20 bis 100 Gew.-%, bezogen auf das Gewicht des Polyols (PL), beträgt.

**3.** Polymerpolyol gemäß Anspruch 1 oder 2, wobei, in Bezug auf den Gesamtunsättigungsgrad t und das Hydroxylgruppenäquivalent s des Polyols (PL), s 500 bis 1.800 beträgt und eine Beziehung der folgenden Formel (3) erfüllt ist;

$$t \leq 3 \times 10^{-5} \times s - 0{,}0006 \qquad (3).$$

**4.** Polymerpolyol gemäß irgendeinem der Ansprüche 1 bis 3, wobei die arithmetische Standardabweichung der volumenbezogenen Partikelgrößenverteilung der Polymerfeinpartikel (JR), die bestimmt wird, indem der Bereich von 0,040 bis 262 $\mu$m durch 65 geteilt wird, wie in den Absätzen [0049]-[0050] der vorliegenden Beschreibung beschrieben, 0,6 oder weniger beträgt.

**5.** Polymerpolyol gemäß irgendeinem der Ansprüche 1 bis 4, wobei der Gehalt der Polymerfeinpartikel (JR), der durch das in Absatz [0046] der vorliegenden Beschreibung beschriebene Verfahren bestimmt wird, 30 bis 75 Gew.-%, bezogen auf das Gewicht des Polymerpolyols (A), beträgt.

**6.** Polymerpolyol gemäß irgendeinem der Ansprüche 1 bis 5, wobei der Gehalt an groben Partikeln, bei denen es sich um Feinpartikel mit einem Partikeldurchmesser von 0,10 mm oder mehr handelt, 0 bis 30 x $10^{-4}$ Gew.-%, bezogen auf das Gewicht des Polymerpolyols (A), bestimmt unter Anwendung des in Absatz [0098] der vorliegenden Beschreibung beschriebenen Verfahrens, beträgt.

**7.** Polymerpolyol gemäß irgendeinem der Ansprüche 1 bis 6, wobei das Verhältnis des Gehalts an löslichem Polymer (Gew.-%) zu dem Gehalt an Polymerfeinpartikeln (Gew.%) (Gehalt lösliches Polymer/Gehalt Polymerfeinpartikel) 1/10 oder weniger, bestimmt gemäß den in den Absätzen [0053]-[0055] der vorliegenden Beschreibung beschriebenen Verfahren, beträgt.

**8.** Polymerpolyol gemäß irgendeinem der Ansprüche 1 bis 7, wobei der Gehalt v (Gew.-%) der Polymerfeinpartikel (JR), bezogen auf das Gewicht des Polymerpolyols, und die Viskosität w (mPa·s) des Polymerpolyols die folgenden Formeln (4) und (5) erfüllen;

$$w \geq 250v - 5000 \qquad (4)$$

$$w \leq 450v - 8400 \qquad (5),$$

wobei die Viskosität w des Polymerpolyols durch das in JIS K1557-5: 2007 beschriebene Verfahren bei 25 °C unter Verwendung eines Viskosimeters vom Brookfield-Typ bestimmt wird.

**9.** Verfahren zur Herstellung eines Polyurethans, in dem eine Polyolkomponente und eine Isocyanatkomponente umgesetzt werden, wobei eine Polyolkomponente verwendet wird, welche 10 bis 100 Gew.-% des Polymerpolyols (A) gemäß irgendeinem der Ansprüche 1 bis 8 umfasst.

**Revendications**

**1.** Polyol polymère (A) dans lequel des particules fines de polymère (JR) qui comportent un composant insaturé éthyléniquement (E) en tant qu'unité constitutive sont contenues dans un polyol (PL), dans lequel le (PL) comprend le polyol (a) qui suit, et le diamètre de particule moyen en volume (R) des (JR), tel que mesuré en utilisant une méthode qui est spécifiée au paragraphe [0097] de la présente description, va de 0,1 à 1,5 $\mu$m ;

polyol (a) : un polyol polyéther qui résulte d'un ajout aléatoire et/ou par blocs d'un oxyde d'alkylène qui est composé principalement par un oxyde de 1,2-alkylène à un composé contenant de l'hydrogène actif, dans lequel le nombre moyen x de moles d'oxyde d'éthylène qui sont ajoutées par atome d'hydrogène actif est de 20 ou moins, le taux d'hydroxydation primaire y de groupes hydroxyle terminaux, comme déterminé au moyen d'une méthode RMN $^1$H qui est décrite aux paragraphes [0018] et [0019] de la présente description, est de 40 % ou plus, et x et y (%) satisfont une relation selon la formule (1) qui suit lorsque x va de 10 à 20 et une relation selon la formule (2) qui suit lorsque x est inférieur à 10 :

$$y \geq 0,328x + 90,44 \qquad (1)$$

$$y \geq 42x^{0,47}(1 - x/41) \qquad (2).$$

2.  Polyol polymère selon la revendication 1, dans lequel la teneur du polyol (a) va de 20 % à 100 % en poids sur la base du poids du polyol (PL).

3.  Polyol polymère selon la revendication 1 ou 2, dans lequel, en ce qui concerne le degré total d'insaturation t et l'équivalent en termes de groupe(s) hydroxyle s du polyol (PL), s va de 500 à 1800 et une relation selon la formule (3) qui suit est satisfaite :

$$t \leq 3 \times 10^{-5} \times s - 0,0006 \qquad (3).$$

4.  Polyol polymère selon l'une quelconque des revendications 1 à 3, dans lequel l'écart type arithmétique sur la base volume de la distribution des tailles de particule des particules fines de polymère (JR) comme déterminé lorsque la plage qui va de 0,040 $\mu$m à 262 $\mu$m est divisée en 65, comme spécifié aux paragraphes [0049] - [0050] de la présente description, est de 0,6 ou moins.

5.  Polyol polymère selon l'une quelconque des revendications 1 à 4, dans lequel la teneur des particules fines de polymère (JR), comme déterminé au moyen du procédé qui est décrit au paragraphe [0046] de la présente description, va de 30 % à 75 % en poids sur la base du poids du polyol polymère (A).

6.  Polyol polymère selon l'une quelconque des revendications 1 à 5, dans lequel la teneur des particules grossières, qui sont des particules fines de polymère qui présentent un diamètre de particule de 0,10 mm ou plus, va de 0 % à 30 $\times$ 10$^{-4}$ % en poids sur la base du poids du polyol polymère (A), tel que mesuré en utilisant la méthode qui est spécifiée au paragraphe [0098] de la présente description.

7.  Polyol polymère selon l'une quelconque des revendications 1 à 6, dans lequel le rapport entre la teneur de polymère soluble (% en poids) et la teneur de particules fines de polymère (% en poids) (teneur de polymère soluble/teneur de particules fines de polymère) est de 1/10 ou moins, tel que mesuré conformément aux méthodes qui sont décrites aux paragraphes [0053] - [0055] de la présente description.

8.  Polyol polymère selon l'une quelconque des revendications 1 à 7, dans lequel la teneur v (% en poids) des particules fines de polymère (JR) sur la base du poids du polyol polymère et la viscosité w (mPa.s) du polyol polymère satisfont les formules (4) et (5) qui suivent :

$$w \geq 250v - 5000 \qquad (4)$$

$$w \leq 450v - 8400 \qquad (5),$$

où la viscosité w du polyol polymère est mesurée au moyen de la méthode qui est décrite dans JIS K1557-5 : 2007 à 25°C en utilisant un viscosimètre du type Brookfield.

9. Procédé pour produire un polyuréthane en faisant en sorte qu'un composant polyol et qu'un composant isocyanate réagissent l'un avec l'autre, dans lequel un composant polyol qui comprend de 10 % à 100 % en poids du polyol polymère (A) selon l'une quelconque des revendications 1 à 8 est utilisé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11236499 A
- JP 2005162791 A
- JP 2005290202 A
- US 3265641 A
- US 4226756 A
- JP 2000344881 A
- US 6531566 B
- JP 2004018543 A
- JP 2004002800 A
- US 2005245724 A1
- US 3383351 A
- JP 7196749 A
- JP 8333508 A
- JP 5059134 A
- JP 9077968 A
- JP 2002308920 A
- US 6756414 B
- JP 2003012706 A
- JP 62036052 A
- JP 2004263192 A
- US 20034217 A1
- JP 2006152188 A